(19) Europäisches Patentamt
European Patent Office
Office européen des brevets

(11) **EP 4 098 097 B1**

(12) **EUROPEAN PATENT SPECIFICATION**

(45) Date of publication and mention
of the grant of the patent:
**06.03.2024 Bulletin 2024/10**

(21) Application number: **22167156.3**

(22) Date of filing: **07.04.2022**

(51) International Patent Classification (IPC):
***A01D 34/00*** (2006.01)

(52) Cooperative Patent Classification (CPC):
**A01D 34/008; G05D 1/028**

(54) **LAND MAINTENANCE SYSTEM, IN PARTICULAR CONFIGURED TO DETERMINE THE CHARGE LEVEL OF A BATTERY OF A MOBILE DEVICE IN RELATION TO A WORKING CYCLE**

BODENPFLEGESYSTEM, INSBESONDERE ZUM BESTIMMEN DES LADEZUSTANDES EINER BATTERIE EINER MOBILVORRICHTUNG IN BEZUG AUF EINEN ARBEITSZYKLUS

SYSTÈME DE MAINTENANCE TERRESTRE, EN PARTICULIER CONFIGURÉ POUR DÉTERMINER LE NIVEAU DE CHARGE D'UNE BATTERIE D'UN DISPOSITIF MOBILE PAR RAPPORT À UN CYCLE DE TRAVAIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.04.2021 IT 202100009002**

(43) Date of publication of application:
**07.12.2022 Bulletin 2022/49**

(73) Proprietor: **Stiga S.p.A. in breve anche St. S.p.A.**
**31033 Castelfranco Veneto (TV) (IT)**

(72) Inventors:
• **VALLONE, Varna**
**31033 Castelfranco Veneto (TV) (IT)**
• **BONILAURI, Matteo**
**Marostica (VI) (IT)**
• **FAVARO, Nicola**
**Torreglia (PD) (IT)**

(74) Representative: **PGA S.p.A.**
**Via Mascheroni, 31**
**20145 Milano (IT)**

(56) References cited:
**EP-A1- 2 829 937       EP-A1- 3 226 094**
**EP-A1- 3 760 022       WO-A1-2020/027611**
**CN-B- 109 258 060      JP-A- 2009 116 634**
**US-A1- 2019 208 700**

**Description**

FIELD OF THE INVENTION

The present invention relates to a land maintenance system, for example turfgrasses or gardens or agricultural land, comprising a mobile device operating within a working area.

BACKGROUND ART

Document EP2829937A1 discloses an apparatus which comprises a base station configured to generate a magnetic field extending over the working area and a self-propelling robot comprising means for moving in the working area, as a function of a movement driving signal. The self-propelling robot has a normal operating mode wherein it performs a working cycle in the working area and a base return mode wherein it returns automatically to the base station. The self-propelling robot further comprises a magnetic field sensor configured to generate a detection signal indicating a right or left position of the self-propelling robot with respect to a set of contiguous lines of force of the magnetic field and a processing unit configured to control the movement of the self-propelling robot inside the working area. The magnetic field search phase is activated for example when the charge level of the battery inside the self-propelling robot 1 is lower a pre-determined threshold.

Document CN109258060B discloses a map construction intelligent lawnmower based on special image identification. The lawnmower comprises a body, a binocular camera arranged above the body, a central processing unit, a marker image database, a walking drive module, a mowing module and a motion state monitoring module. The binocular camera is configured for identifying markers with boundary marks set on the lawn and for measuring the distance between the body and the markers. The marker image database is configured for storing the markers and the corresponding marker images. When the maximum charged capacity of the mower is less than the minimum power consumption of the mower to complete mowing, The central processor compares the real-time power detected by the power detection device with the required power consumption for returning to the original reference point, and if the real-time power reaches the required power consumption for returning to the original reference point, the central processor controls the mower to return to the original reference point for charging.

Document US2019/0208700A1 discloses an autonomous lawn mower comprising a mower body having a motor arranged to drive a cutting blade and to propel the mower body on an operating surface via a wheel arrangement. The mower body includes a navigation system arranged to assist a controller to control the operation of the mower body within a predefined operating area. The navigation system include a number of specific navigation modules each arranged to provide individual navigation information obtained for the mower. The navigation modules may include an odometry module, an inertial measurement unit module, an optical surveying module, a barometric sensor, a sonic or ultrasonic obstacle detection module, GPS sensors which can be used to obtain a GPS coordinate of the mower, compass sensors to obtain a compass bearing of the mower, rain sensors or water sensors, edge sensors or cliff sensors, light sensors, function modules such as clock, WiFi, Bluetooth, GSM, RF, DECT or any other communication protocol modules arranged to receive external information.

Document WO2020/027611A1 discloses a moving robot comprising a main body, a driving unit that moves the main body, a receiver comprising a plurality of signal sensor modules that receive a transmission signal transmitted from a charging station disposed in a travel area, a sensing unit that senses a state of a magnetic field at a point where the main body is located and a controller that controls traveling of the main body by controlling the driving unit. The main body travels in the travel area based on a result of the reception by the receiver, a result of the sensing by the sensing unit and a prestored area map. The controller analyses the sensing result at one point to which the main body departs from the charging station and moves by a predetermined distance and determines a direction in which the charging station is located based on the reception result while the main body travels in the travel area. The controller controls the main body to return to the charging station via the one point based on a result of the analysis and a result of the determination.

OBJECT OF THE INVENTION

Therefore, the object of the present invention is to solve at least one of the drawbacks and/or limitations of the previous solutions.

A first objective is to facilitate and improve the management of a remaining charge of the on-board battery of the mobile device during a working condition.

A further objective of the present invention is to increase the operating efficiency of a mobile device operating within a working area.

A further objective of the present invention is to prevent the blockage of a mobile device within the working area due to the depletion of the charge of the on-board battery.

A further objective of the present invention is to optimize the working processes of the mobile device as a function of the limits imposed by the charge of the on-board battery.

A further objective of the present invention is to reduce the costs related to the on-board battery recharging operations.

A further objective of the present invention is to increase the operating efficiency of the mobile device and at the same time reduce the on-board battery charging costs.

A further objective of the present invention is to reduce or eliminate the downtime of a mobile device due to technical causes, for example due to failures or to carry out periodic maintenance of the mobile device.

These and other objects, which will appear more clearly from the following description, are substantially achieved by one or more systems in accordance with one or more of the appended claims.

SUMMARY

A land maintenance system according to the invention is disclosed in any one of claims 1-14. A method for the maintenance of land is disclosed in claim 15.

Document JP2009-116634A discloses a charging control device including: a charging management part which manages the battery state and power consumption of the autonomous drive unit; a battery run-out time prediction part which predicts the occurrence time of battery run-out in the autonomous drive unit in advance; and a charging scheduling part which forms a schedule of charging to the battery of the autonomous drive unit in the charging station. The charging control device includes a robot communication part and a charging station communication part which report the schedule formed by the forming means to the autonomous drive unit and the charging station.

Document EP3226094A1 discloses a method for controlling operation of a utility vehicle within a working area. A map is generated by arraying multiple cells in a grid pattern with respect to the working area. The area of the working area is calculated based on the generated map. The required work period per unit time period is calculated in accordance with first characteristics with respect to the calculated area of the working area. The calculated area and the calculated required work period are shown to prompt user to input the preferred work period and the preferred working time of day. A target work schedule is calculated by distributing the required work period within the unit time period in accordance with second characteristics based on the user's preferred work period and preferred working time of day inputted by user.

Document EP3760022A1 discloses a method of installation of a mobile device for mowing grass. The installation method comprises a mapping step of a working area for the mobile device, the mapping step of the working area comprises a definition step of a contour delimiting the working area. In the definition step, an operator is followed by using the mobile device while the operator moves along a predetermined trajectory. The path followed by the mobile device during the following step is recorded to determine the contour, the contour comprising the positions occupied by the mobile device along the path. The following step is carried out by means of an optical detection system. The installation method further comprises a recognition step of the operator.

BRIEF DESCRIPTION OF THE DRAWINGS

Some embodiments and aspects of the invention will be described hereinafter with reference to the accompanying drawings, given merely for illustrative, non-limiting purposes in which:

- Figure 1 is a schematic view of a working area in which land maintenance operations have been partially carried out;
- Figure 2 is an exemplary depiction of a user interface of the land maintenance system;
- figure 3 is a schematic view of a remote device;
- figure 4 is a schematic view of a working area comprising an electric docking station for the on-board battery of the mobile device;
- figure 5 is an exemplary connection diagram between a mobile device and a remote infrastructure.

DEFINITIONS AND CONVENTIONS

It should be noted that in the present detailed description, corresponding parts illustrated in the various figures are indicated with the same numerical references. The figures could illustrate the object of the invention through non--scale depictions; therefore, the parts and components illustrated in the figures related to the object of the invention could exclusively relate to schematic depictions.

**Control unit 50**

The system described and claimed herein can comprise at least one control unit 50 responsible for controlling operating conditions implemented by a mobile device apt to perform land maintenance operations within a working area.

The control unit 50 can be a single unit or be formed by a plurality of different control units 50 depending on the design choices and operational needs.

The term control unit 50 means an electronic type component which can comprise at least one of: a digital processor (CPU), an analogue type circuit, or a combination of one or more digital processors with one or more analogue type circuits. The control unit 50 can be "*configured*" or "*programmed*" to carry out certain steps: in practice, this can be accomplished by any means that allows the control unit 50 to be configured or programmed. For example, in the case of a control unit 50 comprising one or more CPUs and one or more memories, one or more programs can be stored in appropriate memory banks connected to the CPU(s); the program(s) contains instructions which, when executed by the CPU(s), program or configure the control unit 50 to carry out the operations described in relation to the control unit 50. Alternatively, if the control unit 50 is or comprises analogue circuitry, then the circuitry of the control unit 50 can be designed to include circuitry configured, in use, to process electrical signals so as to carry out the steps related to the control unit 50. The control unit 50 can have a sampling frequency between 0.1 Hz and 1000 Hz, in particular between 0.5 Hz and 100 Hz, more in particular between 1 Hz and 20 Hz.

In the present disclosure, reference is made to a system comprising a control unit 50 operatively connected to a mobile device: The term "*operatively connected*" means that the control unit is actively interacting with the mobile device: however, such a term does not necessarily mean that the control unit is physically located on the mobile device, but further comprises an embodiment in which the control unit 50 is external to the mobile device, for example in the event that the control unit 50 is carried by a remote device, for example a smartphone, a PC, a tablet, a server or the like. The term control unit is thus to be understood broadly, its physical position not being strictly binding for the implementation of the present invention.

The present disclosure further relates to a first controller, carried by the mobile device, and a second controller carried by a remote device: in such a case the first and the second controller are part of the control unit 50 and are physically positioned on the mobile device and the remote device, respectively. In other words, the first and the second controller 5, 105 define a subset of the control unit 50, limiting their position to the mobile device and the remote device, respectively. However, the technical characteristics of the first controller 5 and the second controller 105 are in accordance with the technical characteristics previously described in relation to the control unit 50.

DETAILED DESCRIPTION

**Mobile Device and working area**

The present disclosure relates to a mobile device 2 configured to move and carry out maintenance operations within a working area 1 of land, such as turfgrass, a garden, or agricultural land, having an extension between 100 and 10000 square meters, in particular between 500 and 2000 square meters: the maintenance operations can comprise, for example, cutting turfgrasses, soil aeration, or its tillage. In particular, the mobile device can be, for example, a lawnmower, an aerator or a tiller. However, such examples are not intended to be limiting, as such maintenance operations can comprise further and different maintenance interventions of the working area 1 while remaining within the scope of the present invention.

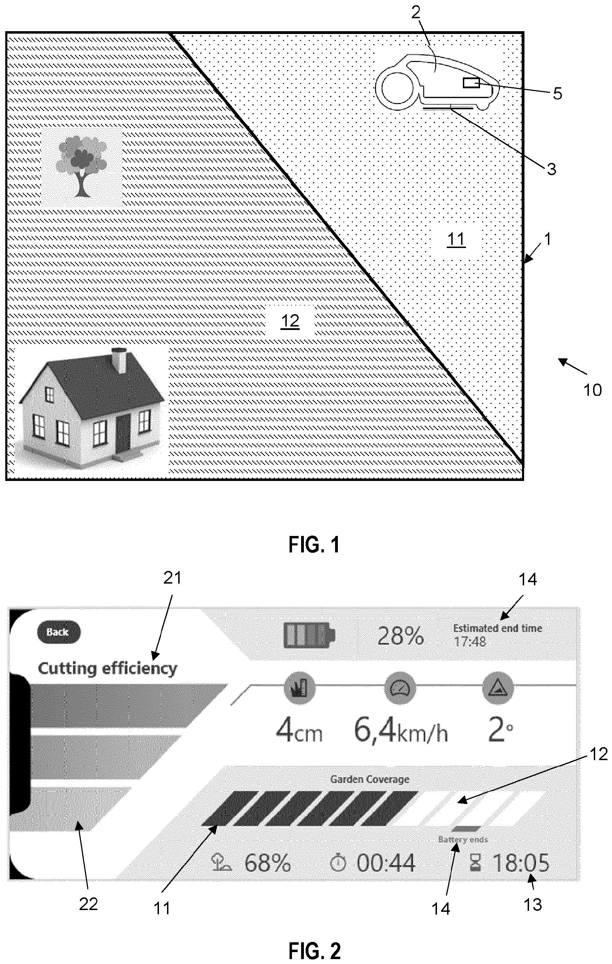

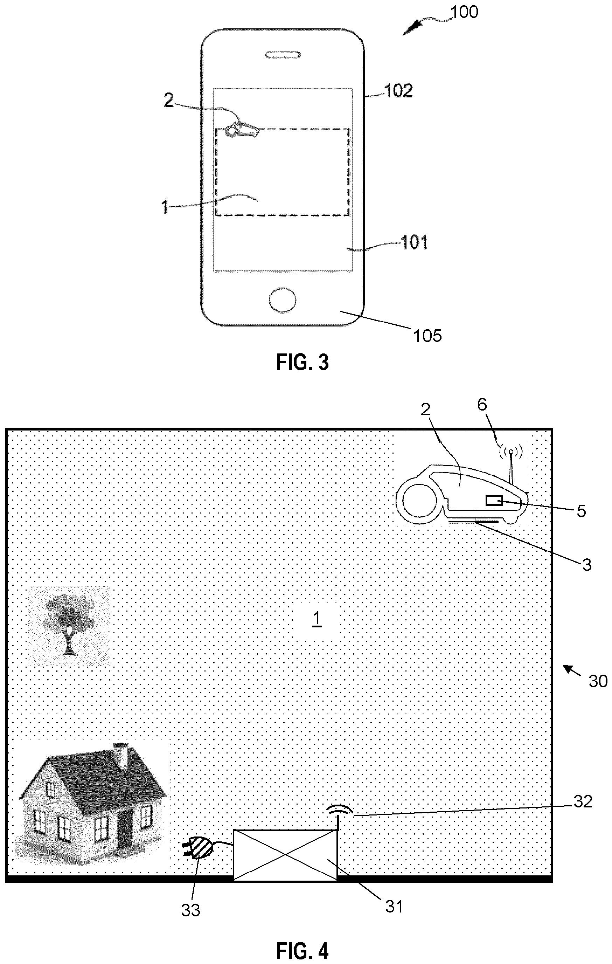

The mobile device 2, schematically depicted within a working area 1 in figures 1 and 4, can be a manually driven device or a self-driving device. If it is manually driven, the mobile device is driven by a subject user: in this case the mobile device can comprise movimentation means for determining the advancement of the mobile device, or the mobile device can be configured to be pushed by a subject user. If it is manually driven and comprises movimentation means, the mobile device can be a tractor comprising a driving station configured to accommodate the subject user, the latter being apt to drive the tractor within the working area 1. Alternatively, if the mobile device is manually driven and does not include movimentation means, the mobile device has size and mass consistent with the need, of a subject user, to be able to push it within the working area 1.

The movimentation means can comprise one or more electric motors operatively connected to a control unit 50 and to at least one drive wheel of the mobile device to determine the advancement movement thereof. The electric motor of the movimentation means preferably has a nominal power between 500 W and 6000 W, in particular between 700 W and 4500 W. Alternatively, the mobile device comprises a combustion engine, for example an Otto or Diesel cycle engine, operatively connected to the movimentation means to determine the movement of the mobile device.

The manually driven mobile device 2 preferably has a length between 50 cm and 300 cm, and a width between 30 cm and 200 cm, and optionally a height between 10 cm and 150 cm.

Alternatively, if the mobile device 2 is self-driving, the mobile device comprises the movimentation means described above and is further configured to move autonomously within the working area 1 by using one or more sensors to orientate itself and avoid obstacles, as per the prior art. For example, the self-driving mobile device 2 can comprise one or more proximity sensors and/or one or more position sensors configured to send signals to a control unit 50 configured to control the movimentation means to drive the mobile device 2 within the working area 1 to carry out the maintenance activities.

The mobile device of the present invention comprises at least one payload 3, for example a blade, an aerator or a tiller configured to carry out the maintenance operations in the working area 1: an electric motor or combustion engine, optionally the same motor as the movimentation means, is configured to activate the payload 3. The control unit 50 is thus connected to the electric motor of the payload 3 and is configured to command the activation thereof. The mobile device provided with payload 3 can thus be a lawnmower, an aerator or a tiller.

In an embodiment, the mobile device 2 comprises a single electric motor or combustion engine, operatively connected to the payload 3 and to the movimentation means. Alternatively, the mobile device 2 can comprise an electric motor or combustion engine, connected to a payload 3, and a further electric motor or combustion engine, operatively connected to the movimentation means.

In a further embodiment, the mobile device 2 is an electrically powered device, in which the movimentation means and the payload 3 are driven by an electric motor powered by an on-board battery.

The self-driving mobile device 2 preferably has a length between 50 cm and 300 cm, and a width between 30 cm and 200 cm, and optionally a height between 10 cm and 150 cm.

The on-board battery of the mobile device can be a rechargeable battery having a charging capacity between 2 Ah and 60 Ah. The battery can be configured to deliver a voltage preferably between 24 Volts and 48 Volts. In more detail, the battery can be configured to deliver a current, during a standard operating condition, between 1 Amps and 60 Amps. The battery can be a rechargeable battery via a power outlet of a home network, for example a 110V, 200V or 380V power source.

The mobile device can carry a control unit 50 on board, in particular a first controller 5, configured to carry out one or more commands in accordance with the present invention. It should be noted that in the present description, when referring to a "*control unit 50*", the latter can be arranged on board the mobile device 2, or can be carried by a remote device 100, such as, for example, a PC, a server, a tablet or a smartphone schematically shown in figure 3, distinct and separate from the mobile device 2. In the present description, if the control unit 50 is arranged on board the mobile device 2, it is referred to as the "*first controller*" or "local controller". Alternatively, in the present disclosure if the control unit 50 is arranged on the remote device 100, it is referred to as a "*second controller*" or a "*remote controller*". In an embodiment common to the embodiments of the present disclosure, the control unit 50 can comprise both the first controller 5 on board the mobile device 2, and the second controller 105 arranged on the remote device 100. The operating steps commanded by the control unit 50 can thus be physically carried out by the first controller 5 of the mobile device 2 and/or by the second controller 105 of the remote device 100.

**COMPLETION OF MAINTENANCE WORK IN THE WORKING AREA**

**System 10**

A system 10 and a respective method relating to land maintenance, in particular turfgrasses or gardens or agricultural land having an extension of between 100 square meters and 10,000 square meters, in particular between 500 square meters and 2,000 square meters, are described below. The system comprises the mobile device 2 in accordance with the description above and operating within a working area 1. The mobile device further comprises the payload 3 configured to carry out maintenance operations within the working area 1: a complete execution of the maintenance operations within the working area 1 defines a working cycle of the mobile device 2. By way of example, if the maintenance operations involve mowing the turfgrass, the working cycle is defined as the series of operations that a mobile device 2 must carry out to complete the mowing of the turfgrass along the entire spatial extent of the working area 1.

Figure 1 schematically shows, and not in scale, the mobile device 2 positioned within a working area 1: in particular, the present disclosure relates to a mobile device 2 electrically powered by an on-board battery, and in which the system is configured to determine the portion of the works carried out in the working area and, as a function of an estimated battery charge level, assess whether said charge is sufficient to complete the working cycle.

In particular, the present system comprises the control unit 50 configured to receive in input from a user, and/or define, a reference parameter. The reference parameter can be representative of a spatial extent of the working area 1 in which the mobile device must operate to carry out the maintenance operations. For example, the reference parameter can be a numerical value defining the spatial extent of the working area 1, for example 100sqm of spatial extent of the working area. In such a case, the working cycle thus involves maintenance operations along a total extent of 100sqm.

Alternatively or in addition, the reference parameter can be representative of a reference time duration defined as a time needed by the mobile device 2 to complete the maintenance operations within the working area 1. In such a case, the reference parameter can be a numerical value representative of such a time duration, for example a time duration of 5 hours: this means that the mobile device 2 takes on average about 5 hours to carry out and complete the maintenance operations within the working area. in such a case, the working cycle thus involves maintenance operations of a total duration of 5 hours.

The system can comprise a position detector, in particular a global positioning system (GPS), operatively connected to the control unit 50 and configured to emit a position signal representative of the position of the mobile device 2 within the working area 1. The control unit 50 is thus configured to receive the position signal, determine a position of the mobile device 2 during an operating condition thereof, and define the reference parameter and/or the work completion parameter as a function of the position assumed by the mobile device 2 during an operating condition thereof.

The control unit 50 can also be configured to define the reference parameter by carrying out a setup cycle of the mobile device 2 within the entire working area: the setup cycle is prior to the working cycle and is apt to simulate the maintenance operations within the working area 1. During the setup cycle, the control unit 50 is configured to determine the spatial extent of the working area 1 and/or detect the reference time duration needed to complete the maintenance operations within the working area 1. In the latter case, the reference time duration substantially corresponds to the duration of the setup cycle.

During the setup cycle, the mobile device is moved within the working area in order to detect the extent of the working area by means of the information detected by the position detector. In this regard, the control unit 50 can be configured to receive a plurality of position signals during the setup cycle, and determine the spatial extent of the working area 1 as a function of the plurality of position signals received during the setup cycle. In other words, during the setup cycle, the mobile device 2 is moved in the working area so as to define the extent of the working area by means of the position information obtained from the position detector and processed by the control unit 50.

The setup cycle can comprise a movimentation step of the mobile device 2 to cover the entire extent of the working area 1: in such a case the mobile device 2 is moved in the entire working area. Alternatively, the setup cycle can comprise a movimentation step of the mobile device 2 only along a perimeter boundary of the working area 1.

In accordance with the present disclosure, the mobile device 2 can be a manually-driven device or a self-driving device. If the device is manually driven, the mobile device is driven by a subject user during the setup cycle and the working cycle. Conversely, if the device is self-driving, the mobile device 2 is configured to autonomously move within the working area by using one or more sensors configured to orientate and guide the mobile device. The device, both if self-driving and if manually driven, can comprise movimentation means configured to determine an advancement in the working area of the mobile device 2: the movimentation means can comprise one or more electric motors operatively connected to the control unit 50 and to at least one drive wheel of the mobile device to determine the advancement movement thereof. The electric motor of the movimentation means preferably has a nominal power between 500 W and 6000 W, in particular between 700 W and 4500 W. If the mobile device is manually driven and provided with movimentation means, the mobile device can be a tractor.

In addition, the mobile device comprises at least the payload 3, for example a blade, an aerator or a tiller configured to carry out the maintenance operations in the working area: an electric motor, or alternatively the same motor as the movimentation means, is configured to activate the payload 3. The control unit 50 is thus connected to the electric motor of the payload 3 and is configured to command the activation thereof.

In accordance with an alternative or complementary embodiment to the previous one, the control unit 50 is configured to receive the reference parameter in input in terms of spatial extent of the working area 1 and/or reference time duration needed for the mobile device to complete the working cycle. In such a case, a subject user can transmit the reference parameter to the control unit 50 via an interface, for example a user interface, in which it is possible to indicate the spatial extent of the working area 1 and/or the reference time duration, thus avoiding the need to carry out a setup cycle. The reference parameter can be further defined in terms of geographical GPS coordinates representative of the working area, for example of a perimeter boundary of the working area: the control unit 50 is then configured to receive in input a virtual map defined by GPS coordinates representative of the working area, and, as a function of such geographical coordinates, estimate a reference spatial extent of the working area 1.

The control unit 50 can also be configured to control the mobile device 2 to move with a predetermined advancement speed: such an average speed can be varied on subject user command or varied during the working cycle by the control unit 50 itself. A variation in the set speed of the mobile device consequently determines a variation in the time duration of the working cycle. In this regard, the reference parameter, when defined in terms of reference time duration, can be related to a reference speed parameter representative of an average advancement speed assumed by the mobile device during the setup cycle, or representative of an average advancement speed needed to complete the maintenance operations within the reference time duration. The reference speed parameter can be received in input or detected during the setup cycle.

The control unit 50 can also be configured to update the reference time duration at each working cycle carried out by the mobile device 2 within the working area 1: in particular, the control unit 50 is configured to detect and store the time duration of a working cycle, and set the reference time duration of a subsequent working cycle equal to said time duration detected in the previous working cycle.

In order to detect the advancement speed of the mobile device, the latter can comprise a speed detector, for example an encoder connected to a wheel of the mobile device or the GPS detector, configured to emit a signal representative of an advancement speed of the mobile device 2: the control unit 50 is thus configured to receive, during the setup and/or working cycle, the speed signal and determine a corresponding reference speed value or parameter of the mobile device 2.

The control unit 50 is also configured to calculate, during the working cycle, a work completion parameter 11 representative of a degree of completion of the working cycle in which the maintenance operations have been completed, as schematically shown in figure 1. The fraction of the working cycle can be calculated in terms of spatial extent 11 of the working area 1, for example where the maintenance operations have been completed on 20 sqm of the total 100 sqm of the working area 1, defining a work completion parameter equivalent to 20 sqm. Alternatively or in addition, the fraction of the working cycle can be calculated in temporal terms, for example where the mobile device has operated for 1 hour of the 5 hours necessary to complete the operations, defining a work completion parameter equivalent to 1 hour. In other words, the work completion parameter represents the amount of work carried out by the mobile device within the working area 1, in terms of spatial extent and/or in temporal terms.

In an embodiment in which the system comprises the position detector, for example the GPS sensor, the position detector is configured to emit position signals representative of the position of the mobile device 2 within the working area 1 during an operating condition thereof, for example during the working cycle. The control unit 50 is thus configured to receive the position signals during the working cycle, define an incremental piece of information related to a spatial fraction of the working area 1 in which the maintenance operations have been completed, and calculate the work completion parameter as a function of the incremental information. The incremental information comprises the positions taken by the mobile device during the working cycle to define the portions of the working area in which the mobile device has carried out the maintenance operations, and to accordingly define the work completion parameter in terms of spatial extent.

Alternatively, the work completion parameter can be defined in terms of the elapsed working time from a start of the working cycle: the control unit 50 is thus configured to compute, from the start of the working cycle, the elapsed working time.

Furthermore, the control unit 50 can be configured to calculate a work completion index as a percentage ratio of the work completion parameter to the reference parameter: for example, the work completion index can be calculated as a ratio of elapsed working time to reference time duration, or as a ratio of the fraction of working area 1 where the maintenance operations have been completed to the reference spatial extent of the working area 1. The work completion index can vary between a minimum value equal to zero, representative of a condition in which no maintenance operations have been carried out in the working area, and a maximum value equal to 1, representative of a condition in which the maintenance operations have been completed covering the entire working area.

The control unit 50 can further be configured to estimate, as a function of the work completion parameter and the reference parameter, a remaining work parameter 12 representative of a fraction of the working cycle in which the maintenance operations have not yet been completed. The remaining work parameter can be defined as the difference between the reference parameter and the work completion parameter: for example, if the reference spatial extent of the working area is 100 square meters and the work advancement parameter is 20 square meters, the remaining work parameter is 80 square meters. Similarly, in temporal terms, if the reference duration is 5 hours and the work advancement parameter is 1 hour, the remaining work parameter is 4 hours.

In other words, the remaining work parameter can be defined in terms of remaining working time 13, or in terms of remaining spatial extent 12 of the working area 1 representative of a spatial extent in which maintenance operations have not yet been completed, as schematically shown in figures 1 and 2. The control unit 50 can thus be configured to calculate the remaining working time as a function of the difference between the reference time duration and an elapsed working time, and/or calculate the remaining spatial extent of the working area 1 as a function of the difference between the spatial extent of the working area 1 and the completed spatial extent of the working area 1. In a specific case, the remaining working time corresponds to the difference between the reference time duration and an elapsed working time.

Furthermore, the control unit 50 can be configured to calculate the remaining working time as a function of both the difference between the reference time duration and the elapsed working time, and the remaining spatial extent of the working area 1: it should be noted that such difference between the reference time duration and the elapsed working time, and the remaining spatial extent are determined by the control unit 50 substantially at the same time, i.e., simultaneously.

If the speed of the mobile device 2 detected during a working cycle is different from the reference speed parameter, the control unit 50 is further configured to calculate the remaining working time as a function of the speed parameter of the mobile device 2 detected during the working cycle and the reference speed value or speed parameter. In particular, the control unit 50 is configured to calculate the remaining working time as a function of a difference between the speed parameter of the mobile device 2 detected during the working cycle and the reference speed parameter.

In detail, the control unit 50 is configured to compare the speed of the mobile device 2 detected during the working cycle with the reference speed, and, as a function of the result of said comparison:

- if the speed of the mobile device 2 detected during the working cycle is substantially equal to the reference speed value, calculate the remaining working time as the difference between the reference time duration and an elapsed working time;
- if the speed of the mobile device 2 detected during the working cycle is higher than the reference speed, calculate the remaining working time as the difference between the reference time duration and an elapsed working time, said difference being multiplied by a coefficient <1 inversely proportional to said difference;
- if the speed of the mobile device 2 detected during the working cycle is lower than the reference speed, calculate the remaining working time as the difference between the reference time duration and an elapsed working time, said difference being multiplied by a coefficient >1 proportional to said difference.

The mobile device 2 of the system 10 is electrically powered by an on-board battery, configured to power in particular the payload 3 and/or the advancement means of the mobile device. The on-board battery of the mobile device is a rechargeable battery having a charging capacity preferably between 2 Ah and 60 Ah. In particular, the control unit 50 is configured to receive in input, or autonomously detect, such a charging capacity of the on-board battery.

The control unit 50 is connected to the on-board battery and configured to estimate a charge level representative of a remaining charge of the on-board battery, and to determine, as a function of the reference parameter, the work completion parameter and the charge level, whether such a charge level is sufficient to complete the working cycle. By way of example, if the reference parameter and work completion parameter are defined in terms of spatial extent, given a reference spatial extent equal to 100 square meters and a work completion parameter equal to 20 square meters, the control unit 50 is configured to estimate whether the battery charge level is sufficient to provide the maintenance operations in the remaining 80 square meters of the working area.

In addition, the step of determining whether the estimated charge level is sufficient to complete the working cycle can be carried out as a function of the remaining work parameter.

The control unit 50 can further be configured to determine an operative parameter of the mobile device 2 representative of a workload. The workload can be, for example, representative of an energy absorption from the battery by the mobile device 2. Alternatively, the operative parameter can comprise an instantaneous speed of the mobile device 2, an average speed of the mobile device 2, an absorption of current from the battery of the mobile device 2, or a cutting height defined by the distance of the payload 3 with respect to the ground.

The operative parameter influences the operating duration of the battery: for example, the higher the energy absorption the shorter the operating duration of the battery. The energy absorption is proportional to the advancement speed of the mobile device and/or the rotation speed of the payload 3. Furthermore, the cutting height also influences the energy absorption by the battery: a reduction in the cutting height results in an increase in the energy absorption under the same conditions of the working area, as it involves a greater resistant load applied to the payload of the mobile device 2.

The step of determining whether the estimated charge level is sufficient to complete the working cycle can thus be carried out as a function of the operative parameter, for example according to the average speed of the mobile device 2 maintained during the working cycle.

The mobile device 2 can further comprise a ground slope detector configured to emit a signal representative of a ground slope in the working area 1: the control unit 50 is thus configured to receive the signal and determine a slope value of the ground. The control unit 50 can be configured to determine the operative parameter as a function of such a slope value: for example, if the mobile device is provided with movimentation means, the workload can be influenced by whether the mobile device is at an uphill or downhill path.

The control unit 50 can also be configured to determine a remaining battery duration 14 as a function of the charge level, as schematically shown in figure 2 in a representation thereof on a display of a user interface. In particular, the control unit 50 can be configured to determine the remaining battery duration as a function of the charge level and operative parameter. The remaining battery duration 14 is representative of a remaining battery operating time for carrying out the maintenance operations. In other words, the operation of the mobile device is ensured for a period equal to the remaining battery duration: after such a period, the battery is to be considered discharged and has an insufficient remaining charge to determine the advancement and/or operation of the payload 3.

The control unit 50 can determine whether the estimated charge level is sufficient to complete the working cycle by means of a comparison step, or by allowing a user to carry out such a comparison, between the remaining battery duration and the remaining working time.

The control unit is thus configured to verify the following conditions so as to determine whether the estimated charge level is sufficient to complete the working cycle:

- if the remaining battery duration is higher than the remaining working time, the estimated charge level is sufficient to complete the working cycle;
- if the remaining battery duration is less than the remaining working time, the estimated charge level is not sufficient to complete the working cycle.

Furthermore, the control unit 50 is configured to activate, or propose to a user to activate, at least one corrective action if the battery charge level is estimated to be insufficient to complete the working cycle, in particular if the remaining battery duration is less than the remaining working time. The corrective action can comprise commanding a return of the mobile device 2 to a docking station and optionally activating an energy-saving mode of the mobile device 2. Alternatively, the corrective action can only involve the activation of the energy-saving mode. In an embodiment, the control unit 50 is configured to carry out the corrective action automatically: alternatively, the control unit 50 is configured to propose to a subject user to manually activate or carry out the corrective action: in the latter case, the corrective action is subject to an approval or a manual operation by the user.

The energy-saving mode can comprise at least one of a reduction of the advancement speed of the mobile device 2 during the working cycle, an increase of a cutting height of the payload 3, a reduction in a rotation speed of the payload 3, or a stop of the payload 3. In other words, the energy-saving mode aims to reduce the energy absorption from the battery by the useful device, so as to allow the mobile device to return towards a docking station.

In this regard, the system of the present invention can comprise the docking station configured to electrically connect to the mobile device and power the on-board battery to allow the recharging thereof. The power station can in turn be powered by a domestic electric network, for example a 110V, 220V or 380V electric network. The docking station can have a power supply between 2 Ah and 20 Ah.

The control unit 50 can further be configured to define a battery usage reference index representative of an energy consumption of the battery needed to complete the working cycle or the setup cycle: in such a case the battery usage reference index defines, qualitatively or quantitatively, how much energy is consumed to carry out an entire working cycle or an entire setup cycle. The battery usage reference index can be defined by the setup cycle, or can be defined during the working cycle: in particular, the control unit 50 can be configured to store and update, for example overwrite, the battery usage reference index at each new working cycle. The step of updating the battery usage index at each cycle allows to consider any variations in the battery usage reference index, caused for example by a deterioration of the performance of the battery, the conditions of the working area or the environmental conditions such as temperature and humidity. Alternatively, the reference index can be representative of a remaining battery duration measured at the end of the working cycle or the setup cycle: in such a case, the battery usage reference index defines, qualitatively or quantitatively, how long the battery could still power the mobile device to carry out the maintenance operations.

The battery usage reference index can be very useful, as it expresses the potential of the battery to power the mobile device during the working cycle. In particular, it should be noted that the step of determining whether the estimated charge level is sufficient to complete the working cycle can be carried out as a function of the battery usage reference index.

The system can further comprise a user interface, comprising a display, for example a touch screen, operatively connected to the control unit 50: the control unit 50 is thus configured to display on the screen one or more pieces of information related to the mobile device, the working cycle, the setup cycle and/or to receive one or more inputs from a user.

The control unit 50 can be configured to display on the screen at least one of:

- the reference parameter, for example the reference time duration and/or the spatial extent of the working area 1;
- the work completion parameter, for example the completed fraction of the working area 1 and/or the elapsed working time;
- the work completion rate;
- the remaining work parameter, for example the remaining fraction of the working area 1 and/or the remaining working time;
- the charge level of the on-board battery;
- the remaining operating duration of the battery.

Furthermore, the control unit 50 can be configured to display on the screen an alarm signal according to the result of the comparison between the remaining operating duration of the battery and the remaining working time: for example, if the remaining working time is greater than the remaining operating duration of the battery, the control unit 50 is configured to display an alarm signal on the screen.

The user interface can also be used to request confirmation from the user to activate the energy-saving mode.

It should be noted that the user interface can be carried by the mobile device 2 or by a remote device 100, depicted in figure 3 merely by way of example, as described below. The remote device 100 can be, for example, a PC, a smartphone, a tablet, or a remote server.

The mobile device 2 can also comprise first communication means configured to operatively wirelessly connect to one or more remote devices: the remote device can in turn comprise second communication means 102. The first and the second communication means 102 can define a wireless-type connection, for example of the WiFi or Bluetooth type. The communication means are configured to remotely transmit and/or receive, in particular to the remote device, one or more of the parameters and information detected by the mobile device 2, such as, for example, the reference parameter, the work completion parameter, the work completion rate, the remaining work parameter, the on-board battery charge level and the remaining operating duration of the battery. Similarly, the communication means can allow to transmit the reference parameter in input from the remote device to the mobile device 2, for example the reference time duration and/or the spatial extent of the working area 1 by means of the user interface, the latter being carried by the mobile device or by the remote device.

In accordance with a first configuration, the system includes the mobile device 2 carrying the payload 3, the first controller 5 of the control unit 50, the on-board battery and the user interface. Optionally, the mobile device can also comprise the position detector and the movimentation means.

In accordance with a second configuration, the system includes the mobile device 2 carrying the payload 3, the on-board battery, a first controller 5 of the control unit 50 and the first communication means. Optionally, the mobile device 2 can also carry the movimentation means and the user interface. In accordance with the second configuration, the mobile device 2 is configured to interface with a remote device 100 comprising the second controller 105 of the control unit 50, and in which the second communication means 102 of the remote device 100 are configured to allow communication with the first communication means of the mobile device 2. The remote device 100 can further comprise the position detector. The first controller 5 of the mobile device 2 can be configured to carry out at least one of the steps described above: in particular the first controller 5 can be configured to command at least one of the first communication means, the movimentation means and the payload 3 of the mobile device.

In accordance with the second configuration and in particular if the remote device 100 comprises the position detector, the mobile device 2 includes a support configured to house the remote device 100 during the working cycle or during the setup cycle. The control unit 50 is thus configured to receive the position signal emitted by the position detector of the remote device, in which the position detected by the position detector of the remote device is assumed to coincide with the position of the mobile device 2 when the remote device is housed in said support of the mobile device.

In the second configuration of the system, during the working cycle and/or during the setup cycle, the remote device is arranged in the support of the mobile device 2, so that the position detector of the remote device provides a position similar to the position of the mobile device 2.

In addition, the second controller 105 of the remote device can be configured to receive or define the reference parameter, calculate the work completion parameter, estimate the charge level of the on-board battery of the mobile device, and determine, at least as a function of the reference parameter, the work completion parameter, and the charge level, whether the estimated charge level is sufficient to complete the working cycle.

The remote device 100 can further be configured to connect, via the second communication means 102, to an internet network and optionally to a remote server: in particular the second controller 105 of the remote device can be configured to transmit remotely, for example using an internet network, the reference parameter, the work completion parameter and the charge level. Furthermore, the second controller 105 of the remote device can be configured to transmit remotely, for example to a remote server 200 and using an internet network, one or more of the parameters described above, such as, for example the remaining work parameter in terms of remaining working time and/or remaining fraction of the working area.

**Method**

The present invention further comprises a land maintenance method, in particular turfgrasses or gardens or agricultural land, by means of a maintenance system preferably of the type described above.

The method comprises at least the steps of:

- receiving in input, and/or defining, a reference parameter, in which the reference parameter is representative of a spatial extent of the working area 1 and/or of a reference time duration defined as a time necessary to complete the maintenance operations within the working area 1;
- calculating, during the working cycle, a work completion parameter representative of a degree of completion of the working cycle;
- estimating a charge level representative of a remaining charge of said on-board battery;
- determining, as a function of the reference parameter, the work completion parameter and the charge level, whether the estimated charge level is sufficient to complete the working cycle.

The method can further include a step of moving the mobile device 2 within the entire working area 1 during a setup cycle to define the reference parameter. The setup cycle, already described previously in accordance with the system of the present invention, is carried out prior to the working cycle and is apt to simulate the maintenance operations within the working area 1. The method related to the setup cycle comprises the steps of determining the spatial extent of the working area 1, and/or detecting the reference time duration needed to complete the maintenance operations within the working area 1. In particular, the setup cycle involves the steps of moving the mobile device 2 within the working area along trajectories apt to cover the entire extent of the working area 1 or along a perimeter boundary of the working area 1.

If the system comprises the position detector, for example if the detector is carried by the mobile device 2 or by the remote device, the setup cycle comprises the steps of detecting incremental information about the position of the mobile device 2 within the working area 1 by means of the position detector, and calculating the extent of the working area 1 based on the incremental information about the position of the mobile device 2 during the setup cycle. If the position detector is carried by the mobile device, the method involves housing the remote device in the support of the mobile device, or keeping the remote device close to the mobile device.

In a further embodiment, the method comprises a step of receiving the reference parameter in input, for example via a user interface carried by the mobile device or by the remote device.

The present method further comprises the steps carried out by the control unit 50 described in the previous description and related to the system 10.

**OPERATIONAL EFFICIENCY INDEX**

The present disclosure further relates to a land maintenance system 20 configured to determine an operational efficiency index 21 related to the maintenance operations carried out by the mobile device within the working area 1. In particular, the present description related to obtaining the operational efficiency index can be in accordance with the previous description related to the system 10 for the completion of the maintenance work in the working area 1.

The present system comprises the mobile device 2 previously described and configured to operate within the working area 1, in which the mobile device comprises the payload 3 configured to carry out the maintenance operations within the working area 1. The mobile device 2 can comprise at least one electric motor operatively connected to the payload 3 and configured to be powered by a source of electric energy.

Optionally, the mobile device can also comprise the movimentation means operatively connected to a respective electric motor, the latter powered by the source of electric energy: in particular, the electric motor of the advancement means can be separate and distinct from the electric motor of the payload 3. The mobile device can thus include both the payload 3 and the electrically powered movimentation means, in particular in which both are powered by the same source of electric energy. Alternatively, the mobile device can comprise a motor connected or connectable to both the advancement means and the payload 3.

The source of electric energy is preferably the on-board battery described above, carried by the mobile device 2 and operatively connected to the electric motor of the payload 3 and optionally to the electric motor of the movimentation means: in an embodiment, the battery is configured to power both the payload 3 and the movimentation means.

In accordance with an alternative embodiment, the mobile device can comprise a combustion engine, for example a Diesel, Otto cycle or natural gas or liquefied gas engine, operatively connected to at least the payload 3 of the mobile device. Furthermore, the combustion engine can be operatively connected to the movimentation means and configured to allow the advancement of the mobile device in the working area 1. The combustion engine can be connected to both the movimentation means and to the payload 3 by means of belts or chains or transmission gears.

During the working cycle the mobile device can experience varying working conditions as a function of, for example, a condition of the soil or turfgrass, a ground slope, a turfgrass height, or a cutting height set during the maintenance operations: in fact, the working conditions can vary as a function of a height of the turfgrass, which results in a resistant load, for example a resistant torque or force, to the payload 3 of the mobile device, in which said resistant load is increasing with increasing turfgrass height. It should be noted that an increase in resistant torque or force applied to the payload 3 can determine in increased current absorption, an increase in the working temperatures of the electric motor or combustion engine connected to the payload 3, and a reduction in the rotation speed of the payload 3: this can cause a reduction in the useful life of the electric motor or combustion engine and/or a reduction in the charge duration of the on-board battery. Furthermore, an excessive ground slope can influence the working conditions of the mobile device: for example, an uphill stretch of the ground can determine an increase in the energy absorption, in particular of the current absorbed, by the electric motor of the movimentation means and/or a reduction in the advancement speed of the mobile device due to the increase in the resistant force: this can result in a reduction in the useful life of the electric motor and/or a reduction in the charge duration of the on-board battery.

It is therefore important to determine an operational efficiency index of the mobile device in relation to the maintenance operations. To such an end, the mobile device comprises the control unit 50, in which the latter is configured to detect at least one operative parameter in the group among a current or power absorbed by the mobile device, a rotation speed of the payload 3, an advancement speed of the mobile device 2, a variation in time of the rotation speed of the payload 3, a variation in time of the advancement speed of the mobile device 2. The variation in time in the rotation speed or advancement speed can be detected in a predetermined or infinitesimal time interval. It should be noted that the current or power absorbed can derive from the electric motor of the payload 3 or from the electric motor of the advancement means or can derive from both.

The control unit 50 is further configured to define an operative index on the basis of at least one of the above operative parameters or a combination thereof, and determine, as a function of such operative index, the operational efficiency index of the mobile device 2 related to the maintenance operations. The operational efficiency index 21 is schematically shown in figure 2 in a representation thereof on a screen of a user interface.

The operative index can comprise at least one of a current absorbed by the payload 3, a current absorbed by the payload 3 in combination with a supply voltage of the payload 3, a current absorbed by the payload 3 in combination with a corresponding rotation speed of the payload 3, a current absorbed by the payload 3 in combination with a corresponding advancement speed of the mobile device, a rotation speed of the payload 3 in combination with an advancement speed of the mobile device 2, a combination of a current absorbed by the payload 3, a rotation speed of the payload 3 and an advancement speed of the mobile device 2, a combination of a current absorbed by the payload 3, a rotation speed of the payload 3, an advancement speed of the mobile device 2 and a supply voltage of the payload 3. In other words, the operative index is representative of a resistant load applied to the mobile device and/or to the payload 3 of the mobile device 2.

In an embodiment, the operative index comprises a combination of a current or power absorbed by the payload 3, a rotation speed of the payload 3 and an advancement speed of the mobile device 2: in particular, in such a case, the control unit 50 is configured to determine the operational efficiency index as a function of such a combination of the operative parameters. In a further embodiment, the control unit 50 is configured to determine the operational efficiency index as a function of only the rotation speed of the payload 3 and a comparison thereof with a respective threshold value as described in the description below.

It should be noted that the control unit 50 can be configured to define the operative index, and consequently the operational efficiency index, as a function of a single operative parameter, for example, only the current or power absorbed by the electric motor of the payload 3, or the rotation speed of the payload 3 or a variation thereof or the advancement speed of the mobile device 2. Alternatively, the control unit 50 can be configured to define the operative index, and consequently the operational efficiency index, as a function of a combination of operative parameters of the mobile device.

As already mentioned above, the cutting height of a lawnmower influences the resistant load applied to the payload 3, for example to the cutting blade, during an operating condition of the mobile device, and can further influence a current absorbed by the electric motor of the payload 3. In this regard, the control unit 50 can be configured to receive in input, or detect, a height, in particular a distance, of the payload 3 with respect to the ground, and define the operative index as a function of such height and one or more of the previously introduced operative parameters.

Similarly, also a slope of the ground can influence an energy absorption by the electric motor of the movimentation means: the control unit 50 is thus configured to receive in input or detect a ground slope at the position of the mobile device 2, and define the operative index as a function of the ground slope and one or more of the previously introduced operative parameters.

To detect the current or power absorbed, the mobile device can comprise an electric current or power detector operatively connected to the control unit 50 and configured to emit a signal representative of an electric current or power absorbed by the electric motor of the payload 3 or by the electric motor of the advancement means.

To detect the advancement speed of the mobile device, the mobile device can comprise a speed detector, for example an encoder or a GPS detector operatively connected to the control unit 50.

To detect the rotation speed of the payload 3, the mobile device can comprise a rotation speed detector, for example an encoder, directly connected to the payload 3 or to the electric motor or combustion engine of the payload 3.

By way of example, an increase of an operational efficiency index value can correspond to a reduction of the current or power absorbed by the electric motor of the payload 3 and/or by the electric motor of the movimentation means. Similarly, an increase in an operational efficiency index value can correspond to a reduction in the fuel consumption of the combustion engine.

The following describes some embodiments related to determining the operational efficiency index.

In a first embodiment, the control unit 50 is configured to determine the operational efficiency index as a function of the rotation speed of the payload 3: in particular, in such an embodiment, the control unit 50 is configured to determine the operational efficiency index solely as a function of the rotation speed of the payload 3 and a comparison thereof with a threshold rotation speed.

The mobile device 2 in accordance with the first embodiment comprises the rotation speed detector of the payload 3 operatively connected to the control unit 50.

In the first embodiment, the control unit 50 is configured to define at least one threshold rotation speed of the payload 3, and determine, by means of the rotation speed detector, an operational rotation speed of the payload 3 of the mobile device 2 in an operating condition: in the operating condition the payload 3 is active and the mobile device 2 carry out maintenance operations within said working area 1. For example, in the operating condition, the mobile device 2 moves within the working area 1 and mows the turfgrass. In the operating condition, the payload 3 of the mobile device is thus subjected to a resistant load, in particular a resistant force or torque, resulting from the maintenance operations, for example from a turfgrass cutting operation.

In the first embodiment, the control unit 50 is further configured to compare the operational rotation speed of the payload 3 with the threshold rotation speed of the payload 3, and define the operational efficiency index of the mobile device 2 as a function of this comparison. The operational efficiency index can be defined as a function of the following conditions:

- if the operational rotation speed of the payload 3 is higher than the threshold rotation speed of the payload 3, the control unit 50 is configured to define a first operational efficiency index of the mobile device;
- if the operational rotation speed of the payload 3 is lower than the threshold rotation speed of the payload 3, the control unit 50 is configured to define a second operational efficiency index of the mobile device 2: it should be noted that the second operational efficiency index of the mobile device 2 is lower than said first operational efficiency index of the mobile device 2.

In particular, it should be noted that a lower value of the operational efficiency index can correspond to a higher current or fuel consumption of the motor, worse performance of the motor itself, and optionally worse quality related to the land maintenance operations.

The control unit 50 can further be configured to determine, by means of the rotation speed detector, or receive in input from a user by means of, for example, a user interface, a nominal rotation speed of the payload 3 of the mobile device 2 in a free condition: the free condition can be defined as a condition in which the payload 3 is active and the mobile device is not carrying out maintenance operations within said working area 1. Therefore in the free condition the payload 3 of the mobile device, for example the rotating blade, rotates without a resistant force or torque deriving from the maintenance operations, for example deriving from the turfgrass cutting operations: the nominal speed of the payload 3 is thus substantially a constant and predefined value as a function of the supply voltage or current of the electric motor. Similarly, if the mobile device is provided with a combustion engine, the nominal rotation speed of the payload 3 is defined by the combustion engine in the condition in which the payload 3 does not meet a resistant force or torque deriving from the maintenance operations. In other words, the nominal rotation speed of the payload 3 is a standard preset operating speed that is obtained when the payload 3 is free of a resistant force or torque deriving from the maintenance operations. When the payload 3 is subjected to a resistant load, deriving for example from a cutting operation in the case of a rotary blade, the operational rotation speed of the payload 3 can be reduced with respect to the nominal rotation speed, or the electric motor will have to absorb a higher power in order to maintain an operating speed equal to the nominal speed to compensate for the increase in the resistant load applied to the payload 3.

The control unit 50 can further be configured to define the threshold rotation speed of the payload 3 as a predetermined fraction of the nominal rotation speed of the payload 3 of the mobile device 2 in the free condition: in other words, the threshold rotation speed of the payload 3 is defined as a function of the nominal rotation speed of the payload 3. The threshold rotation speed of the payload 3 is lower than the nominal rotation speed of the payload 3: in particular, the threshold rotation speed of the payload 3 can be between 3% and 20% lower with respect to the nominal rotation speed of the payload 3, more in particular between 5% and 15% lower.

In more detail, the threshold rotation speed of the payload 3 can comprise at least a first and a second threshold rotation speed of the payload 3, in which the first threshold rotation speed of the payload 3 is between 3% and 9%, in particular between 5% and 8%, preferably between 6% and 7%, lower with respect to the nominal rotation speed of the payload 3, and the second threshold rotation speed of the payload 3 is between 10% and 20%, in particular between 11% and 15%, preferably between 13% and 14%, lower with respect to the nominal rotation speed of the payload 3. In other words, the second threshold rotation speed is lower with respect to the first threshold rotation speed.

The control unit 50 is thus configured to compare the operational rotation speed of the payload 3 with the first and the second threshold rotation speed of the payload 3, and define the operational efficiency index of the mobile device 2 as a function of this comparison. In particular, the control unit 50 is configured to define the operational efficiency index of the mobile device in accordance with the following conditions:

- if the operational rotation speed of the payload 3 is higher than the first threshold rotation speed of the payload 3, the control unit 50 is configured to define a first operational efficiency index of the mobile device 2;
- if the operational rotation speed of the payload 3 is lower than the first threshold rotation speed and higher than the second threshold rotation speed, the control unit 50 is configured to define a second operational efficiency index of the mobile device 2: in such a case this second operational efficiency index of the mobile device 2 is lower with respect to the first operational efficiency index of the mobile device 2;
- if the operational rotation speed of the payload 3 is lower than the first and the second threshold rotation speed, the control unit 50 is configured to define a third operational efficiency index of the mobile device 2: this third operational efficiency index of the mobile device 2 is lower with respect to the second operational efficiency index of the mobile device 2.

A reduction in the operational efficiency index can lead to a worsening of the operating conditions of the mobile device, an increase in electrical or fuel consumption, and a reduction of the useful life of the components such as the electric motor or combustion engine connected to the payload 3 or to the movimentation means. It should be noted that the operational efficiency index of the mobile device 2 decreases as the operational rotation speed decreases.

The operational efficiency index can also be determined in accordance with a second embodiment described below. In particular, in the second embodiment the mobile device comprises at least one electric motor operatively connected to the payload 3 and/or to the movimentation means and powered by the source of electric energy, for example the on-board battery: the mobile device can comprise an electric motor connected to the payload 3 and a further electric motor connected to the movimentation means. The control unit 50 is thus configured to determine the operational efficiency index as a function of the electric current or power absorbed by the electric motor of the payload 3 and/or of the movimentation means: in particular in such a second embodiment the control unit 50 can be configured to determine the operational efficiency index as a function only of the electric current or power absorbed during an operating condition of the mobile device and a comparison thereof with a threshold electric current or power.

In order to detect the current or electric power absorbed, the mobile device comprises at least one detector of current or electric power absorbed by the mobile device or in particular only by the electric motor of the payload 3 of the mobile device. The electric current or power detector is operatively connected to the control unit 50.

The control unit 50 is thus configured to define at least one threshold electric current or power, and to determine, by means of the current or power detector, an operating electric current or power in an operating condition of the mobile device: the operating condition is the same as previously described in relation to the first embodiment, and is defined as a condition in which the payload 3 is active and in which the mobile device 2 carries out the maintenance operations within said working area 1.

The control unit 50 is further configured to compare the operating electric current or power with the threshold electric current or power of the payload 3, and to define the operational efficiency index of the mobile device 2 as a function of this comparison. In particular, the operational efficiency index is defined as a function of the following conditions:

- if the operational electric current or power is lower than the threshold electric current or power, the control unit 50 is configured to define a first operational efficiency index of the mobile device 2;
- if the operational electric current or power of the payload 3 is higher than the threshold electric current or power of the payload 3, the control unit 50 is configured to define a second operational efficiency index of the mobile device 2: the second operational efficiency index of the mobile device 2 is lower with respect to the first operational efficiency index of the mobile device 2.

The threshold electric current or power can be defined as a function of a nominal electric current or power. In particular, the control unit 50 is configured to determine, by means of the electric current or power detector, or receive in input from a user by means of a user interface, a nominal electric current or power absorbed by the electric motor of the payload 3 and/or of the movimentation means in a free condition: the free condition is the same as previously described in relation to the first embodiment, in which the payload 3 is active and the mobile device is not carrying out maintenance operations within said working area 1. The control unit 50 is thus configured to define the threshold electric current or power as a function of the nominal electric current or power, in which the threshold electric current or power is higher with respect to the nominal electric current or power. In more detail, the threshold electric current or power is between 3% and 20% higher with respect to the nominal electric current or power, more in particular between 5% and 15% higher.

The threshold electric current or power can comprise at least a first and a second threshold electric current or power, in which the first threshold electric current or power is between 3% and 9%, in particular between 5% and 8%, preferably between 6% and 7%, higher with respect to the nominal electric current or power of the payload 3, while the second threshold electric current or power is between 10% and 20%, in particular between 11 % and 15%, preferably between 13% and 14%, higher with respect to the nominal electric current or power. In general, the second threshold electric current or power is higher than the first threshold electric current or power.

The control unit 50 can thus be configured to compare the operational electric current or power with the first and the second threshold electric current or power, and define the operational efficiency index of the mobile device 2 as a function of this comparison. In particular, the operational efficiency index can be defined as a function of the following conditions:

- if the operational electric current or power is lower than the first threshold electric current or power of the payload 3, the control unit 50 is configured to define a first operational efficiency index of the mobile device 2;
- if the operational electric current or power is higher than the first threshold electric current or power and lower than the second threshold electric current or power, the control unit 50 is configured to define a second operational efficiency index of the mobile device 2: in such a case the second operational efficiency index of the mobile device 2 is lower with respect to the first operational efficiency index of the mobile device 2;
- if the operational electric current or power is higher than the first and the second threshold electric current or power, the control unit 50 is configured to define a third operational efficiency index of the mobile device 2: in such a case the third operational efficiency index of the mobile device 2 is lower with respect to the second operational efficiency index of the mobile device 2.

In other words, the operational efficiency index of the mobile device 2 decreases as the electric current or power absorbed increases.

The operational efficiency index can also be determined in accordance with a third embodiment described below. In particular, in the third embodiment the mobile device comprises at least one electric motor operatively connected to the payload 3 and/or to the movimentation means and powered by the source of electric energy, for example the on-board battery: the mobile device can comprise an electric motor connected to the payload 3 and a further electric motor connected to the movimentation means.

In order to detect the current or electric power absorbed, the mobile device comprises at least one detector of current or electric power absorbed by the mobile device or in particular only by the electric motor of the payload 3 of the mobile device. The electric current or power detector is operatively connected to the control unit 50.

The mobile device 2 in accordance with the third embodiment further comprises the rotation speed detector of the payload 3 operatively connected to the control unit 50.

The control unit 50 is thus configured for:

- defining at least one threshold electric current or power and at least one threshold rotation speed of the payload 3;
- determining, by means of the current or power detector, an operational electric current or power in an operating condition of the mobile device 2: the operating condition is the same as described in relation to the first and/or the second embodiment, in which the payload 3 is active and the mobile device 2 carries out maintenance operations within said working area 1,
- determining, by means of the rotation speed detector, an operational rotation speed of the payload 3 of the mobile device 2 in such an operating condition,
- comparing:

  ∘ the operational electric power or current with the threshold electric power current; and
  ∘ the operational rotation speed of the payload 3 with the threshold rotation speed of the payload 3;

- defining the operational efficiency index of the mobile device 2 as a function of this comparison.

The operational efficiency index can thus be defined as a function of the following conditions:

- if the operational electric current or power is lower than the threshold electric current or power, and if the operational rotation speed of the payload 3 is higher than the threshold rotation speed of the payload 3, the control unit 50 is configured to define a first operational efficiency index of the mobile device 2;
- if the operational electric current or power of the payload 3 is lower than the threshold electric current or power of the payload 3, and if the operational rotation speed of the payload 3 is lower than the threshold rotation speed of the payload 3, then the control unit 50 is configured to define a second operational efficiency index of the mobile device 2;
- if the operational electric current or power of the payload 3 is higher with respect to the threshold electric current or power of the payload 3, and if said operational rotation speed of the payload 3 is less than the threshold rotation speed of the payload 3, then the control unit 50 is configured to define a third operational efficiency index of the mobile device 2.

It should be noted that the second operational efficiency index of the mobile device 2 is lower than the first operational efficiency index of the mobile device 2, and the third operational efficiency index of the mobile device 2 is lower than the second operational efficiency index of the mobile device 2. As a result, the third operational efficiency index of the mobile device 2 is lower than the first operational efficiency index of the mobile device 2.

In particular, the threshold rotation speed of the payload 3 is between 3% and 20% lower with respect to the nominal rotation speed of the payload 3, more in particular between 5% and 15% lower. Further, the threshold current or power is preferably between 3% and 20% higher with respect to the nominal current or power, more in particular between 5% and 15% higher.

In accordance with the third embodiment, the threshold rotation speed of the payload 3 can comprise at least a first and a second threshold rotation speed of the payload 3, in which the first threshold rotation speed of the payload 3 is between 3% and 9%, in particular between 5% and 8%, preferably between 6% and 7%, lower with respect to the nominal rotation speed of the payload 3, and in which the second threshold rotation speed of the payload 3 is between 10% and 20%, in particular between 11% and 15%, preferably between 13% and 14%, lower with respect to said nominal rotation speed of the payload 3. In general, the second threshold rotation speed of the payload 3 is lower with respect to the first threshold rotation speed of the payload 3.

Furthermore, the threshold electric current or power can comprise at least a first and a second threshold electric current or power, in which the first threshold electric current or power is between 3% and 9%, in particular between 5% and 8%, preferably between 6% and 7%, higher with respect to the nominal electric current or power, and in which the second threshold electric current or power is between 10% and 20%, in particular between 11% and 15%, preferably between 13% and 14%, higher with respect to the nominal electric current or power.

The control unit 50 is thus configured to compare the operational electric current or power with the first and the second threshold electric current or power, compare the operational rotation speed of the payload 3 with the first and the second threshold rotation speed of the payload 3, and to define the operational efficiency index of the mobile device 2 as a function of these comparisons.

The operational efficiency index of the mobile device 2 can be defined as a function of the following conditions:

- if the operational electric current or power is lower with respect to the first threshold electric current or power, and if the operational rotation speed of the payload 3 is higher the first threshold rotation speed of the payload 3, then the control unit 50 is configured to define a first operational efficiency index of the mobile device 2;
- if the operational electric current or power is higher than the first threshold electric current or power and lower with respect to the second threshold electric current or power, and if the operational rotation speed of the payload 3 is lower with respect to the first threshold rotation speed and higher than the second threshold rotation speed, then the control unit 50 is configured to define a second operational efficiency index of the mobile device 2. The second operational efficiency index of the mobile device 2 is lower with respect to the first operational efficiency index of the mobile device 2;

- if the operational electric current or power is higher than the first and the second threshold electric current or power, and if the operational rotation speed of the payload 3 is lower with respect to the first and the second threshold rotation speed, then the control unit 50 is configured to define a third operational efficiency index of the mobile device 2: the third operational efficiency index of the mobile device 2 is lower with respect to the second operational efficiency index of the mobile device 2.

The threshold and nominal rotation speed, as well as the threshold or nominal current or power can be defined in numerical terms.

In this regard, the nominal rotation speed can be between 2500 rpm and 3500 rpm, in particular between 2700 rpm and 3300 rpm, more in particular it is substantially equal to 3000 rpm.

The first threshold rotation speed can be between 2300 rpm and 3200 rpm, in particular between 2700 rpm and 2900 rpm, more in particular it is substantially equal to 2800 rpm.

The second threshold rotation speed can be between 2000 rpm to 3150 rpm, in particular between 2500 rpm and 2700 rpm, more in particular it is substantially equal to 2600 rpm.

The nominal current or power can be between 50 and 70 Amps and/or between 2500 and 3400 Watts. The first threshold current or power can be between 55 and 60 Amps, or between 2600 and 2800 Watts.

The second threshold current or power can be between 60 and 65 Amps, or between 2800 and 3100 Watts. In the second and third embodiment, the current or power detected by the current or power detector is absorbed by at least one of the electric motor of the payload 3 of the mobile device 2, and the electric motor of the movimentation means of the mobile device 2. For example, the electric current or power detected by the current detector can be absorbed simultaneously, during the operating condition, both by the electric motor of the payload 3 and by the electric motor of the movimentation means.

Once the operational efficiency index is determined, the control unit 50 is further configured to compare the operational efficiency index with a predetermined threshold efficiency index, and as a function of this comparison, for example if the operational efficiency index is lower than the predetermined threshold efficiency index, identify at least one corrective action apt to increase the operational efficiency index. The corrective action can include increasing the height of the payload 3 with respect to the ground, reducing the advancement speed of the mobile device 2, reducing the rotation speed of the payload 3, or reducing the supply current or voltage of the electric motor of the payload 3.

In this regard, as previously described in relation to the mobile device, the mobile device can comprise an advancement speed detector, for example an encoder or the GPS sensor, and/or a rotation speed detector of the payload 3. The control unit 50 is thus configured to receive such speed signals and determine an advancement speed value and/or a rotation speed of the payload 3. In addition, the control unit 50 can be configured to command the rotation speed of the electric motor of the movimentation means and/or the electric motor of the payload 3 to vary the advancement speed and/or the rotation speed of the payload 3 so as to carry out the corrective action and increase the operational efficiency index. The control unit 50 can thus be configured to carry out a corrective action as a function of the operational efficiency index determined during an operating condition of the mobile device.

Furthermore, the mobile device can comprise height adjustment means configured to allow a variation of the height of the payload 3 of the mobile device 2 with respect to the ground: the height adjustment means can be manually commanded, in which the height adjustment means are configured to allow a user to act manually to vary the height of the payload 3 with respect to the ground, or automatically controlled, in which the mobile device 2 comprises one or more actuators operatively connected to the height adjustment means and to the control unit 50 and configured to vary the height of the payload 3. In the latter case, the control unit 50 is configured to command a corrective action consisting in controlling the adjustment means so as to vary the height of the payload 3 of the mobile device with respect to the ground.

The corrective action can be performed automatically by the control unit 50, or can be performed manually by a subject user. In more detail, the control unit 50 can be configured to automatically perform one or more of the corrective actions described as a function of the comparison between the operational efficiency index and the predetermined threshold efficiency index. For example, upon the occurrence of the condition, the control unit 50 can be configured to vary the advancement speed and/or the rotation speed of the payload 3 automatically, without further intervention by the subject user. Alternatively, the corrective action identified can be subject to acceptance by the subject user before being carried out.

The system can further include a user interface, including a screen, and connected to the control unit 50, in which the control unit 50 is configured to display the corrective action identified to increase the efficiency index on this screen. The corrective action identified can be indicated by chromatic highlighting. In addition, the user interface can be configured to request from the subject user a confirmation signal representative of a consent to carry out the identified corrective action, and/or an acknowledgement by the subject user of the corrective action proposed by the control unit 50.

The user interface of the system can be used to display at least one of the height of the payload 3 with respect to the ground, the advancement speed of the mobile device 2, a ground slope at the position of the mobile device 2, an index representative of the current absorbed by the payload 3, an index representative of the rotation speed of the payload 3, and the operational efficiency index of the mobile device 2 in real time. The control unit 50 is preferably configured to simultaneously determine and display the real-time operational efficiency index on the screen.

The control unit 50 can be configured to display the operational efficiency index of the mobile device 2 on the screen by means of a graphic pattern 22, shown in figure 2, comprising variable chromatic or geometric characteristics as a function of a value of the operational efficiency index. For example, a green chromatic pattern 22 can correspond to a higher, and therefore better, value of the operational efficiency index with respect to a value of the operational efficiency index represented by a red or orange chromatic pattern. Optionally, the control unit 50 can be configured to define a safety limit related to the operational efficiency index, and to compare at least a current value of the operational efficiency index, during an operating condition of the mobile device 2, with the safety limit, and, as a function of this comparison, for example if the current value of the efficiency index is lower than the safety limit, deactivate the payload 3, stopping the rotation of the electric motor.

The safety limit of the operational efficiency index defines a limit beyond which a dangerous condition can be triggered: in fact, an excessively low rotation speed of the payload 3 or an excessively high electric current or power absorbed, can result in physical damage to the mobile device, in particular to the electric motor or combustion engine connected to the payload 3 and/or to the movimentation means and/or to the on-board battery.

The system is configurable in a first configuration in which the mobile device 2 carries the payload 3, the on-board battery, and the control unit 50 configured to determine the operational efficiency index. In accordance with the first configuration, the mobile device can further comprise the movimentation means, and optionally the user interface.

In accordance with a second configuration, the mobile device 2 carries the payload 3, the battery, a first controller 5 of the control unit 50, and first communication means. Optionally, the mobile device 2 in accordance with the second configuration further carries the movimentation means and optionally the user interface. In the second configuration, the mobile device 2 is configured to connect, by the first communication means, to a remote device comprising a second controller 105, second communication means 102 configured to allow communication with the first communication means of the mobile device 2, and the user interface. The remote device, schematically shown in figure 3, can be a smartphone, a tablet, a computer. The first and second communication means 102 can comprise a wireless type connection such as WiFi or Bluetooth. It should be noted that the first controller 5 and the second controller 105 are part of the control unit 50: therefore the previously described steps carried out by the control unit 50 can be physically actuated by the first controller 5 and/or by the second controller 105.

## RETURN TO THE DOCKING STATION

A system 30 and a respective method apt to instruct the mobile device 2 to head towards a docking station 31 when the charge level of the on-board battery is below a predetermined threshold is described below. The system 30 for the "*return to the docking station*", schematically shown in figure 4, can be in accordance with the systems related to the "*completion of work in the working area*" and the determination of the "*operational efficiency index*".

In particular, the mobile device in accordance with the present system 30 comprises the payload 3 configured to carry out maintenance operations within the working area 1, and the movimentation means in accordance with the previous descriptions: in particular, the payload and the movimentation means can comprise respective electric motors which can be activated and commanded by the control unit: in a preferred embodiment, the mobile device comprises distinct electric motors for the payload and for the movimentation means, and in which the control unit is configured to activate and command said motors independently of each other. The mobile device 2 can be a lawnmower, an aerator or a tiller.

The mobile device of the system 30 can be a self-driving mobile device or a manually driven mobile device. In particular, regardless of whether the mobile device 2 is self-driving or manually driven, it is powered by the on-board battery, in which the latter is configured to power the movimentation means and the payload 3. In an embodiment, the battery is configured to power both the electric motor of the movimentation means and the electric motor of the payload 3.

The system further comprises a distance detector 6 configured to emit at least one signal representative of a distance of the mobile device 2 with respect to the docking station. In accordance with an embodiment, the distance detector can comprise an on-board position detector carried by the mobile device 2, for example a GPS detector, configured to emit a position signal representative of the position of the mobile device 2 during an operating condition: the control unit 50 is thus configured to receive the position signal of the mobile device 2 during an operating condition, promptly determine, as a function of this position signal, the position of the mobile device 2, receive or define a position of the docking station, and estimate a control parameter representative of the distance between the mobile device 2 and the docking station as a function of the position of the mobile device 2 and the position of the docking station, to define an interposed distance between the mobile device 2 and the docking station. In particular, the control parameter can correspond to the actual distance between the mobile device and the docking station 31, or to the length of a connection path between the position of the mobile device 2 and the docking station 31.

The position of the docking station 31 can be defined by a further position detector 32 configured to emit a signal representative of the position of the docking station 31, in which the control unit 50 is configured to receive the position signal from the docking station and determine the geographical position thereof. As a function of the position of the docking station 31 and the detected position of the mobile device 2 during an operating condition, the control unit 50 is thus configured to estimate the control parameter.

The position detector 32 configured to define the position of the docking station 31 can be brought from the docking station itself. Alternatively, the position detector 32, configured to define the position of the docking station, can be carried by a remote device 100, for example a smartphone or tablet, of the type schematically shown in figure 3, or a remote GPS detector: in such a case, the control unit 50 is configured to define a setting condition apt to detect the position of the docking station 31 comprising the steps of arranging the remote device 100 at the docking station 31, detecting the position of the remote device 100 by means of the position detector of the remote device 100, assuming that the position of the remote device 100 coincides with the position of the docking station 31, and sending the detected position of the docking station 31 to the control unit 50.

The position of the docking station 31 can optionally be received in input by a subject user via a user interface. The position of the docking station can be transmitted in input to the control unit 50 in terms of, for example, of GPS coordinates or by identifying the docking station 31 on a virtual map.

Alternatively, the distance detector of the system 30 can comprise a flight time sensor or an optical sensor carried by the mobile device 2 and/or the docking station 31 and configured to emit a signal representative of a distance interposed between the mobile device 2 and the docking station 31: the control unit 50 is thus configured to estimate the distance parameter as a function of this detected distance. In this specific embodiment, the system does not need to detect the geographical positions of the mobile device 2 and the docking station 31 in order to determine the interposed distance thereof.

It should be noted that the distance between the mobile device 2 and the docking station 31 may not correspond to an actual length of a return path that the mobile device must travel in order to reach the docking station 31. In this regard, the control unit 50 can be configured to receive or obtain a virtual map of the working area 1 and identify, for each of the estimated positions of the mobile device 2 in the working area, a corresponding return path towards the docking station 31. The control unit is thus configured to calculate the actual length of such a return path: the distance between the mobile device and the docking station is calculated along one of the return paths of the mobile device to the docking station. As a consequence, the control unit is configured to define the minimum charge level as a function of such an actual length of the return path.

In addition, the control unit 50 is configured to estimate in real time a charge level representative of a remaining charge on said battery or a remaining duration of said battery. The remaining time of the battery is in accordance with what has already been described above: in particular, the remaining duration of the battery is representative of a remaining operating time of the battery to carry out the maintenance operations. In other words, the operation of the mobile device is ensured for a time period equal to the remaining battery duration: after such a period, the battery is to be considered discharged and has an insufficient remaining charge to determine the advancement and/or operation of the payload 3. The charge level can also be indicated in percentage terms with respect to a maximum battery duration, in which the latter is representative of a remaining operating time of the battery when the battery is fully charged. Similarly, the charge level can also be indicated in percentage terms with respect to a maximum voltage delivered by the battery when the latter is fully charged.

The control unit 50 is further configured to define, as a function of the control parameter, a minimum charge level defined as a charge level at least sufficient to allow the mobile device 2 to reach the docking station and/or be driven up to the docking station. In particular, such minimum battery charge level must be sufficient to provide electric energy to the electric motor of the movimentation means of the mobile device 2 to allow the return of the mobile device 2 towards the docking station 31. Alternatively, such minimum battery charge level must be sufficient to provide electric energy to the electric motor of the payload of the mobile device 2 until the mobile device 2 has returned to the docking station 31. In addition, such minimum battery charge level must be sufficient to provide electric energy to the electric motor of the movimentation means of the mobile device 2 to allow the return of the mobile device 2 to the docking station 31, and simultaneously be sufficient to provide electric energy to the electric motor of the payload 3 to continue to carry out the maintenance operations in the working area.

It should be noted that the minimum charge level varies as the distance parameter varies: in particular, as the distance between the mobile device 2 and the docking station 31 increases, the minimum battery charge level necessary to allow the return of the mobile device 2 to the docking station increases.

In an embodiment, the step of determining the minimum charge level can include a step of estimating a normalized average consumption of the battery charge with respect to a space travelled by the mobile device 2 or a time interval, for example an average charge consumption per meter of advancement or per second: in this case, the control unit 50 is thus configured to determine the minimum charge level as a function of the average consumption and the distance parameter: in fact, it should be noted that the algebraic product between the distance, detected between the mobile device 2 and the docking station 31, and the average consumption provides as a result the necessary and sufficient charge for the mobile device 2 to cover such a distance. The control unit 50 can be configured to estimate the average consumption during the maintenance operations, or during a setup cycle apt to simulate the maintenance operations in the working area 1. The setup cycle can have the same characteristics as previously disclosed in the present detailed disclosure.

The average consumption of the battery charge can be estimated by the control unit 50 as a function of at least one of an electric current supplied by the battery, a supply voltage supplied by the battery, an advancement speed of the mobile device 2, a rotation speed of the payload 3 or a combination thereof, and/or a time variation of the battery charge level. In this regard, the mobile device 2 can comprise a detector of the current and/or voltage supplied by the battery, an advancement speed detector of the mobile device such as an encoder or a GPS detector, and/or a rotation speed detector of the payload 3 connected to the control unit 50.

In addition, the control unit 50 can be configured for detecting and storing, during a working cycle of the mobile device, a time variation of the battery charge level to define an average time consumption, and determine the minimum charge level as a function of said average time consumption. In particular, the control unit 50 is configured to estimate the distance parameter, estimate such an average time consumption, and define the minimum charge level as a function of the average time consumption and the distance parameter.

In more detail, the control unit 50 is configured to estimate the distance parameter, estimate said average time consumption, calculate a return time as a ratio between the distance parameter (in particular the distance between the docking station and the mobile device) and an average return speed, compare said return time with a remaining charge duration of the battery and, as a function of such a comparison, define the minimum battery charge level to allow the mobile device to return to the docking station. The return time can be defined as a time needed by the mobile device 2 to move from the point where it is located up to the docking station. The average return speed can be defined by the control unit 50 and be equal to an average advancement speed of the mobile device during the working cycle: alternatively the average return speed can be lower with respect to the average speed of the mobile device. Such an average return speed can be preset or can be modifiable by a user by means of a user interface of the system 30, for example a user interface on-board the mobile device 2 or a user interface 102 of the remote device 100.

It should be noted that a remaining charge level of the battery, such that the remaining charge duration is equal to the return time, substantially corresponds to the minimum charge level of the battery.

In addition, the control unit 50 can further be configured to determine a battery charge level and a remaining battery duration as a function of such a charge level, in which such a remaining battery duration can be expressed in temporal terms. In particular, the control unit 50 can be configured to determine the remaining battery duration as a function of the battery charge level and, further, as a function of the operative parameter previously described in relation to the system 20 for determining the efficiency index or the system 10 for work completion in the working area 1. The remaining battery duration is representative of a remaining operating time of the battery to carry out the maintenance operations: in other words, the operation of the mobile device is ensured for a period equal to the remaining battery duration. After such a period, the battery is to be considered discharged and has a remaining charge which is insufficient to determine the activation of the movimentation means of the mobile device and/or the activation of the payload 3.

The control unit 50 is thus configured to compare the estimated charge level with the minimum charge level and, as a function of such a comparison, carry out at least one corrective action. The corrective action can comprise at least one of commanding the movement means to determine a return of the mobile device 2 towards the docking station and activating an energy-saving mode of the mobile device 2. The energy-saving mode can comprise at least a reduction in an advancement speed of the mobile device, an increase in a cutting height of the mobile device 2, a reduction in a rotation speed of the payload 3, or a stop of the payload 3. The control unit can be configured to control both the return of the mobile device 2 towards the docking station, and to activate the energy-saving mode.

In temporal terms, the control unit 50 is thus configured to estimate the remaining battery duration, estimate the return time as a function of the distance parameter and optionally as a function of an average return speed of the mobile device, compare the return time with the remaining battery duration, and carry out, as a function of this comparison, at least one corrective action. In particular, the control unit is configured to carry out the corrective action when the following condition is satisfied:

$$RT > C*BT$$

where:

    RT = return time;
    BT = remaining battery duration;
    C = safety factor, in which $0.8 < C < 0.99$, in particular in which $0.85 > C < 0.95$.

The safety factor can be preset or modifiable by the user via a user interface.

In a further embodiment, the control unit 50 can be configured to detect a work interruption position of the mobile device 2 representative of the point of the working area 1 in which the battery charge level reaches the minimum charge level, store such a work interruption position, and command, after a battery recharging step of the mobile device 2, the movimentation means to drive the mobile device 2 towards the work interruption position. Such a characteristic can be particularly useful since it allows the mobile device to restart, after the recharging step, the maintenance operations from the point where the latter had been suspended.

Furthermore, control unit 50 can be configured to make explicit, for example in combination with the activation of the energy-saving mode, at least one instruction related to the piloting of the mobile device 2 towards docking station. Such an instruction can be displayed on a user interface of the system, for example on a user interface carried directly by the mobile device 2, or on a user interface of the remote device 100: in the latter case the mobile device 2 and the remote device 100 comprise, as previously described, first and second communication means configured to transmit data to each other, for example in this case to transmit the piloting instructions to a subject user. In this case the subject user can be placed driving the mobile device 2, for example a tractor.

The docking station 31, schematically shown in figure 4, is configured for receive the mobile device 2, allowing an electrical connection with the mobile device 2, and recharging powering the on-board battery of the mobile device 2. The power station can in turn be powered by a domestic electric network, for example a 110V, 220V or 380V electric network. The docking station can have a power supply between 2 Ah and 20 Ah. The mobile device 2 and the docking station comprise respective recharging connectors configured to electrically connect to each other when the mobile device 2 is at the docking station to allow recharging the on-board battery of the mobile device 2. In particular, such charging connectors can be configured to connect with each other automatically when the mobile device reaches the docking station.

The control unit 50 can further comprise a local controller carried by the mobile device 2 powered by the on-board battery and configured to carry out the steps of the control unit 50 described above. The mobile device 2 can further comprise first communication means configured to remotely transmit and receive one or more signals.

The system 30 can also comprise a remote device 100 of the type schematically shown in figure 3, for example a computer, a smartphone or a tablet, comprising at least one user interface 101, second communication means 102 configured to wirelessly connect to the first communication means, and a second controller 105 operatively connected to the user interface and to the second communication means 102. The first controller 5 of the mobile device can be configured to send to the remote device, by means of the respective first and second communication means, one piece of status information of the mobile device 2: the piece of status information can comprise at least one of the detected charge level of the on-board battery, the distance parameter such as in particular the distance between the mobile device 2 and the docking station, the minimum charge level of the on-board battery, and one or more of the corrective actions carried out.

## CHARGING TIME SLOTS

A system 40 and a method for land maintenance are described below, in particular turfgrasses or gardens or agricultural land, related to allowing a recharging operation of the on-board battery of the mobile device 2 at said one or more optimal charging time slots. In particular, the present system 40 can be in accordance with the previous descriptions related to the "*completion of work in the working area*", the determination of the "*operational efficiency index*", and the "*return to the docking station*".

The present system 40 comprises at least one docking station 31, at least one manually driven or self-driving mobile device 2 operating within a working area 1 and comprising at least one payload 3 configured to carry out the maintenance operations within said working area 1.

The mobile device is electrically powered and configured to be powered, during a working condition, by the on-board battery in accordance with the previous descriptions. In particular, the on-board battery is rechargeable by means of the docking station 31.

The system 40 further comprises the control unit 50 operatively connected to the mobile device 2 and configured to receive or set one or more charging time slots, and to allow a recharging operation of the on-board battery of the mobile device 2 at one or more of these charging time slots.

The time slots define respective one or more time windows within which the control unit 50 is configured to allow charging the on-board battery: for example a charging time slot in which the recharging operation is allowed can be set between 8:00 pm and 5:00 am. The control unit 50 can be configured to promote or selectively enable the recharging operations of the on-board battery of the mobile device 2 at such a charging time slot. On the contrary, outside the charging time slot, the control unit 50 can be configured to prohibit, discourage or substantially reduce the recharging operations of the on-board battery of the mobile device 2. The time slots can be set as a function of a variable electric energy cost, so as to determine economic savings during the recharging operations. Alternatively or in combination, the time slots can be defined so as to be able to recharge, in distinct moments, a plurality of different mobile devices 2: for example, in the case with a single docking station 31 and a plurality of mobile devices, the control unit can be configured to define separate time slots for each mobile device.

The control unit 50 can also be configured to define such time slots and to allow recharging the battery of the mobile device as a function of a charge level thereof. In particular, the control unit 50 is configured to estimate a charge level representative of a remaining charge of the on-board battery or of a remaining duration thereof, compare such an estimated charge level with at least one charge threshold level, and, as a function of this comparison, allow a charging operation of the on-board battery of the mobile device 2. For example, the recharging operation is allowed if the estimated charge level is lower than the threshold charge level.

The expression "*allow recharging*" is intended as the fact that the control unit is configured to control the docking station 31 so that, at the defined time slot, a connection between the docking station and the battery of the mobile device consequently determines the recharging condition. On the contrary, the expression "*prohibit recharging*" is intended as the fact that, even if the mobile device is arranged at the docking station and connected to the latter, the docking station does not provide electric energy to the on-board battery of the mobile device.

In detail, the docking station 31 can be configured to receive the mobile device 2, allow an electric connection with the mobile device 2, and recharge the on-board battery of the mobile device 2 when within the at least one time slot.

The mobile device 2 and the docking station 31 each comprise a respective charging connector configured to electrically connect to each other when the mobile device 2 is at the docking station 31, so as to allow recharging the on-board battery of the mobile device 2. The docking station in turn comprises an electrical connector 33 configured to electrically connect to an electrical socket of a domestic electric network: such an electrical connector 33 allows the electrical supply of the docking station 31 itself.

In an embodiment in which the mobile device 2 is self-driving, the mobile device 2 comprises the movimentation means, of the type as described above, and operatively connected to the control unit 50. The control unit 50 can be configured to set an operating program of the mobile device as a function of the battery charge level, a current time, and a comparison thereof with the set charging time slot(s). The operating program can comprise a step of carrying out the maintenance operations of the working area, moving the mobile device 2 within the working area to carry out the maintenance operations, setting an energy-saving mode of the mobile device and carrying out the maintenance operations in the energy-saving mode, and allowing or determining the recharging operation of the on-board battery of the mobile device 2 at the docking station 31.

The energy-saving mode can comprise at least one of a reduction in the advancement speed of the mobile device 2 during the working cycle, an increase in a cutting height of the payload, a reduction in a rotation speed of the payload 3, for example of the rotation speed of the cutting blade, and a stop of the payload 3. The system 40 related to the charging time slots is configurable in a first configuration, in which if the estimated battery charge level is lower than a predefined minimum battery charge level, and if the current time is included in the time slot or at least one of the time slots, then the control unit 50 is configured to move the mobile device 2 to the docking station and to determine the recharging operation of the on-board battery. In a second configuration, if the charge level of the on-board battery of the mobile device 2 is lower than a predefined minimum battery charge level, and if the current time is outside the time slot or each of the time slots, then the control unit 50 is configured to stop or hold the mobile device 2 or command a return of the mobile device 2 towards a storage spot pending the charging time slot.

In a third configuration, if the charge level of the on-board battery of the mobile device 2 is higher than a predefined minimum battery charge level, the control unit 50 is configured to command the mobile device 2 to carry out the maintenance operations in the working area. In particular, in such a case, the control unit 50 is configured to command the movement of the mobile device 2 in the working area to carry out the maintenance operations.

In a fourth configuration, if the charge level of the on-board battery of the mobile device 2 is higher than a predefined minimum battery charge level but below a predefined average battery charge level, in which the average charge level is higher than the minimum charge level, and if the current time is outside the at least one time slot, the control unit 50 is configured to carry out the maintenance operations and activate an energy-saving mode of the mobile device 2.

In a fifth configuration, if the charge level of the on-board battery of the mobile device 2 is higher than a predefined minimum battery charge level but lower than a predefined average battery charge level, in which the average charge level is higher than the minimum charge level; and if the current time is included in the at least one time slot, the control unit 50 is configured to move the mobile device 2 towards and at the docking station to determine the recharging of the on-board battery.

In accordance with what has just been described, the minimum charge level of the battery can be defined as an insufficient or almost insufficient charge level to power the payload 3 and/or the movimentation means of the mobile device for carrying out the maintenance operations within the working area. In other words, the minimum battery charge level represents a level below which the battery needs to be recharged in order to be able to effectively power the mobile device during the maintenance operations in the working area. For example, the minimum charge level can be between 0% and 25% of the maximum charge level of the battery, in particular between 5% and 20%.

The average charge level of the battery can instead be defined as a charge level sufficient to power the payload 3 and/or the movimentation means of the mobile device to carry out the maintenance operations. In particular, the average charge level is lower with respect to a maximum battery charge level, but higher than the minimum charge level. For example, the average charge level can be between 40% and 60% of the maximum charge level of the battery.

Furthermore, the control unit 50, or a controller of the docking station 31, can be configured to detect a network parameter representative of a saturation of the electric network, compare the network parameter with a threshold network parameter, and determine, as a function of this comparison, the at least one charging time slot. Alternatively, the system 40 can be configured to receive such a network parameter in input.

The control unit 50 or a controller of the docking station can also be configured to receive, from an electricity supply company, one or more signals representative of an energy cost that varies according to different times of the day. The control unit is thus configured to define at least one time slot of minimum cost representative of time slots in which the energy cost is minimum or lower than a predefined cost threshold, and to set the at least one charging time slot at such a minimum cost time slot.

In an embodiment, the control unit 50 can be further configured to receive in input or recognize, during a recharging operation, a piece of characteristic information of the docking station 31 itself and optionally a piece of information representative of an energy capacity of the on-board battery of the mobile device 2. The piece of characteristic information of the docking station 31 can comprise an electric charging power deliverable by the docking station. The energy capacity of a battery can be defined in terms of Watts/hour or Amps/hour.

The control unit can thus be configured to estimate, as a function of such characteristic information of the docking station and optionally of the capacity of the on-board battery, a time duration of a full recharge or a recharging end time. Furthermore, the control unit can be configured to set the previously described operating program as a function of the recharging time duration /or the recharging end time.

Once the recharging time duration has been estimated, the control unit 50 can be configured to define, set, or modify the charging time slot, so that the recharging operation occurs entirely or at least for the most part within the charging time slot.

The system 40 can comprise a user interface operatively connected to the control unit 50 and configured to receive at least one piece of information representative of the charging time slots from a subject user. For example, the subject user can manually provide the time slots to the control unit via the user interface, or can provide information about the on-board battery of the mobile device, such as its performance and its maximum energy capacity. The user interface can be carried directly by the mobile device and have a screen, for example a touch screen. Alternatively or in combination, the user interface can be carried by the remote device 100 comprising a screen 101.

In a configuration, the mobile device 2 comprises, in particular carries on board, the payload 3, the battery, a local controller of the control unit 50, first communication means, movimentation means for determining the advancement thereof within the working area 1 and optionally a user interface. The mobile device is thus configured to interface with a remote device 100 comprising a remote controller 105, second communication means configured to allow communication with the communication means of the mobile device 2, and a user interface 101. The first communication means and the second communication means 102 can comprise a wireless type connection such as WiFi or Bluetooth. The remote device 100 can have the same characteristics described above and be configured to receive from a subject user the information representative of said time slots, and send said information representative of said time slots to the mobile device 2 by means of the second communication means.

The system 40 can be part of a power plant further comprising a local electric network having a renewable energy source, for example solar panels or wind generators. The control unit can be configured to receive in input a power index representative of an electric power which can be delivered by the local electric network optionally as a function of one or more time slots, and receive from the local electric network at least one power signal representative of an electric power delivered, during an operating condition of the local electric network, from the local electric network optionally as a function of one or more time slots. The control unit can thus be further configured to determine one or more maximum power time slots as a function of the power index and/or power signal, and set the charging time slot at the maximum power time slot.

## DIAGNOSTIC MONITORING

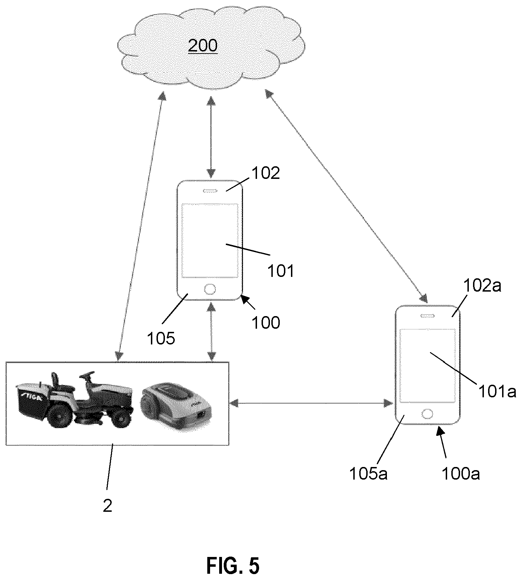

A further system for land maintenance in accordance with the above disclosures is described below. A schematic representation of such a system is shown in figure 5 and comprises a control unit (50) configured to carry out a diagnostic monitoring procedure related to a mobile device 2 adapted to perform maintenance operations within the working area. In particular, the mobile device is in accordance with any one of the embodiments described above.

The diagnostic monitoring procedure of the present system is aimed at detecting data and operative parameters of the mobile device 2 in order to perform diagnostics related to failures present on the mobile device or to provide repairs or technical maintenance on the mobile device 2.

In particular, the diagnostic monitoring procedure comprises a step of receiving from the mobile device 2 at least one diagnostic parameter representative of at least one service or operational status of the mobile device 2. The diagnostic parameter can be representative of an operating condition of the on-board battery of the mobile device 2 or an operating time duration related to one or more components of the mobile device 2. In particular, the operating time duration related to one or more components of the mobile device 2 defines a time span in which the mobile device has carried out maintenance operations within the working area, or a spatial extent covered by the mobile device during its operation: in other words, the operating time duration represents how much, in terms of time and/or movement, the mobile device 2 has worked within the working area.

Furthermore, the diagnostic parameter can comprise a failure parameter representative of the presence of one or more failures present on the mobile device, such as, for example, a failure in the electric motor or combustion engine, in an electric or electronic component of the mobile device, or in the on-board battery. In other words, the control unit 50 is configured to query one or more components of the mobile device and verify the operation thereof.

Furthermore, the diagnostic parameter can comprise an energy parameter representative of a current absorbed by the on-board battery in a predetermined condition. The predetermined condition can be a working condition of the mobile device within the working area during the execution of the land maintenance operations. In other words, the predetermined condition can be a standard operating condition of the mobile device.

The diagnostic monitoring procedure further comprises a step of comparing the diagnostic parameter with a respective predetermined threshold diagnostic parameter. The threshold diagnostic parameter can comprise threshold values related to a diagnostic parameter of the type as described above: in particular, the threshold diagnostic parameter can comprise a predefined value or a respective predefined interval. For example, the threshold diagnostic parameter can comprise a threshold parameter of an operating condition of the on-board battery of the mobile device 2, an operating time duration related to one or more components of the mobile device 2, a failure limit parameter representative of a failure or an incipient failure on the mobile device 2. The threshold diagnostic parameter can define an interval of threshold values, between a minimum value and a maximum value of the corresponding diagnostic parameter. For example, the control unit can be configured to detect a current absorbed by the electric motor of the payload or the movimentation means when in operation, and comparing such a current with a threshold current representative of a proper operation of the electric motor or on-board battery. As a function of such a comparison, the control unit is thus configured to verify the correct operation of the electric motor or battery: if, for example, the current absorbed by the electric motor of the payload or of the movimentation means when in operation exceeds the threshold current, the control unit is configured to emit a diagnostic parameter representative of a failure.

If the comparison step returns a diagnostic parameter exceeding the respective threshold diagnostic parameter, the control unit is thus configured to propose or executing upon confirmation of a subject user at least one technical assistance program of the mobile device. The technical assistance program of the mobile device 2 can comprise the step of identifying, from the diagnostic parameter, at least one component of the mobile device 2 in a status of current failure or malfunction or susceptible to an incipient failure or malfunction. Furthermore, the technical assistance program can comprise the step of carrying out a spare parts warehouse management operation as a function of such an identification: the management operation can be for example an automatic procurement operation of a component of the mobile device 2 to replace the component which has failed or is susceptible to an incipient failure or malfunction.

The diagnostic monitoring procedure further comprises a step of wirelessly sending the diagnostic parameter to at least one remote infrastructure, as described below.

The diagnostic monitoring procedure further comprises a step of receiving at least one identification parameter of the mobile device 2. The identification parameter can be representative of a type of mobile device 2 and/or of one or more of its components, for example mechanical and/or electric components forming the mobile device. The identification parameter can, for example, identify the mobile device as a lawnmower, tiller, aerator, or as a self-driving or manually driven mobile device. Furthermore, the identification parameter can indicate that the mobile device is a thermal-motor tractor, or alternatively a self-driving lawnmower robot. In other words, the identification parameter can thus broadly indicate a family of mobile devices to which the present mobile device belongs.

In addition, the identification parameter can be a unique code representative of the mobile device 2 emitting the identification parameter. In such a case, the identification parameter not only represents a family of mobile devices to which the present mobile device belongs, but uniquely identifies the device which emitted such an identification parameter. Such an identification parameter can thus only be associated with a single mobile device. As a function of this unique identification parameter, the control unit can be configured to obtain further information about the mobile device, such as the year of manufacture, technical specifications, type and/or brand of components installed on the mobile device 2, the sale date, whether or not a warranty is present. Furthermore, the control unit can be configured, as a function of this unique identification parameter, to verify any assistance interventions or repairs carried out, the maintenance history of the mobile device and whether the periodic maintenance has been carried out correctly or not.

The diagnostic monitoring procedure further comprises a step of wirelessly sending the identification parameter to the remote infrastructure. In particular, the diagnostic monitoring procedure involves sending both the identification parameter and the diagnostic parameter wirelessly to the remote infrastructure.

In particular, the mobile device 2 comprises first wireless communication means configured to remotely send the diagnostic parameter. The mobile device further comprises a first controller 5, forming part of the control unit 50, carried on board by the mobile device 2 and configured to command the first communication means to wirelessly send the identification parameter and the diagnostic parameter to the remote infrastructure. The first wireless communication means can comprise an internet module configured to communicate with the remote infrastructure via an internet network.

The remote infrastructure can thus be a remote server 200 connected, either directly or indirectly as shown in figure 5 by means of a remote communication network, to the mobile device 2 so as to be able to transmit and receive data of the mobile device. The remote communication network can be the internet network.

In an embodiment, the remote infrastructure includes a remote device 100, a remote device 100 comprising second communication means 102 configured to operatively connect to the first communication means of the mobile device 2, and a second controller 105 forming part of the control unit 50 carried directly by the remote device 100. The first controller 5 is thus configured to command the first communication means in order to wirelessly send the identification parameter and/or the diagnostic parameter to the second communication means of the remote device 100. It should be noted that the first and the second communication means respectively of the mobile device 2 and of the remote device 100 are configured to communicate with each other within a maximum radius lower than 100m, in particular lower than 50m, more in particular lower than 25m. For example, the first and the second communication means of the mobile device 2 and of the remote device 100 are configured to communicate with each other via a local WiFi network or via a Bluetooth protocol or local WiFi internet network.

The remote device 100 further preferably includes a user interface 101 comprising a screen for displaying at least one piece of information related to the mobile device 2, for example for displaying the diagnostic parameter and/or the identification parameter on the screen, so as to highlight to a subject user a possible failure of the mobile device, or information related to a periodic maintenance to be carried out on the mobile device, or to display messages from a technical operator in relation to the mobile device.

The mobile device 100 is further configured to wirelessly communicate with the remote server 200 of the remote infrastructure. In particular, the mobile device 100 can comprise an internet module configured to communicate with the remote infrastructure by means of an internet network, so as to send the identification parameter and the diagnostic parameter of the mobile device to the remote server 100.

In an embodiment, the system is thus configured to determine a local wireless connection, for example Bluetooth or local WiFi, between the mobile device 2 and the remote device 100, so that the mobile device 2 can transmit the diagnostic and identification parameter to the remote device 100: the remote device 100 is thus connectable to the remote server via the internet module, so that the parameters of the mobile device can be transmitted over long distances. In other words, the remote device 100 acts as a gateway between the mobile device 2 and the remote server, and vice versa.

In an alternative embodiment, the mobile device 2 comprises on board the internet module configured to communicate with the remote server via an internet network. Thereby, the mobile device can communicate directly with the remote server 200 without requiring the presence of an interposed remote device 100.

The remote infrastructure of the present system can further comprise a remote service device 100a, distinct from the remote device 100. The remote service device 100a can be in addition to the remote device 100. In particular, the remote service device 100a comprises a service controller 105a, service communication means 102a configured to communicate with the remote server 200 via the internet network, and a service user interface 101a operatively connected to the service controller 105a and comprising a screen. The remote device 100 and said remote service device 100a are thus configured to communicate with each other through the remote server 200 by means of the internet network. In other words, the remote server 200 is configured to allow a communication, in particular a bidirectional communication, between the remote device 100 and the remote service device 100a, in which the remote server 200 is configured to send the identification parameter and/or the diagnostic parameter of the mobile device 2 to the remote service device 100a. Additionally or alternatively, the remote server 200 can be configured to allow bidirectional communication between the remote service device 100a and the first communication means of the mobile device 2, in which the first communication means of the mobile device 2 are configured to communicate with the remote server 200 by means of the internet network.

In accordance with an embodiment, the remote service device 100a is configured to receive setup instructions from a subject user by means of the service user interface 101a: the subject user can be a person skilled in the art. The setup instructions can be representative of an installation procedure or steps of the mobile device 2 within the working area. The setup instructions can thus comprise a geographical definition of the working area within which the mobile device is configured to carry out the maintenance operations, for example GPS coordinates representative of the working area and/or a perimeter boundary of the working area. The setup instructions can further comprise a surface extent of the working area: in particular the setup instructions can comprise a geographical definition of the working area 1 within which the mobile device is intended to carry out maintenance operations. The geographical definition can comprise GNSS coordinates, in particular GPS coordinates, representative of the working area 1 and/or a perimeter boundary of the working area 1. Furthermore, the setup instructions can comprise a virtual map of the working area 1 and a surface extent of the working area 1.

The setup instructions can further comprise technical information about the on-board battery, for example, an energy capacity of the on-board battery. The setup instructions can also comprise a predetermined height of the payload of the mobile device with respect to the ground, or a resetting of one or more counters of the mobile device 2 adapted to detect, during an operating condition of the mobile device, an operation time period of one or more components of the mobile device 2. Lastly, the setup instructions can further comprise a geographic position of a docking station 31 within the working area 1 configured to allow a recharging condition of the on-board battery of the mobile device 2.

The remote service device 100a is further configured to send the setup instructions to the mobile device 2 through the remote server 100.

In an embodiment, the remote service device 100a is configured to send such setup instructions to the mobile device 2 via the internet network and through the remote server 100, without the interposition of the remote device 100.

Alternatively, the remote service device 100a is configured to send the setup instructions to the mobile device 2 via the internet network and through the remote server 100, and the first and second communication means of the mobile device 2 and the remote device 100, respectively. The first communication means of the mobile device 2 are thus configured to receive the setup instructions, and send the setup instructions to the first controller 5 of the mobile device 2 to carry out the installation of the mobile device within the working area. In an embodiment in accordance with the foregoing, the control unit 50 can be configured to carry out, on the basis of the diagnostic parameter, a predictive diagnostic procedure apt to estimate a predictive future maintenance program related to one or more components of the mobile device 2. More specifically, the control unit 50 can be configured to estimate the predictive maintenance program on the basis of the operating time duration related to one or more components of the mobile device 2 and/or an energy parameter representative of a current absorbed by the on-board battery in a predetermined condition. For example, the energy parameter can include a variation in the energy parameter outside an interval of expected values representative of a failure or an incipient failure. In other words, the control unit 50, as a function of parameters and data related to the operation of the mobile device, is configured to temporarily envisage a repair or replacement of a component of the mobile device 2, and thus anticipate such information to the subject user by means of a user interface, for example by means of the user interface 101 of the remote device 100. In more detail, the control unit 50 can be configured to display on the user interface of the remote device 100 or the remote service device 100a an estimated time period within which to carry out one or more maintenance operations on the mobile device in accordance with the predictive maintenance program.

It should be noted that the term "*control unit 50*" refers to any one of the first controller 5 of the mobile device 2, the second controller 105 of the remote device 100, or the service controller 105a of the remote service device 100a. In other words, the previously described steps as carried out by the control unit 50 can be carried out by one of the first and second controller 5, 105 or the service controller 105a.

It should also be noted that the remote infrastructure can comprise the remote server 200, the remote device 100 and the remote service device 100a, each of which preferably comprises a memory configured to store data and parameters related to the operation of the mobile device, for example the threshold diagnostic parameter and the maintenance program. In particular, such memory can be configured to store at least one of the predefined value and the predefined interval, the tolerance threshold, the end value, and/or an association rule between the diagnostic parameter and at least one technical assistance program.

In an embodiment, the mobile device 2 can further comprise a detector of at least one parameter and/or index representative of the health and/or hydration status of the working area 1, for example, a turfgrass hydration status. Such a detector can be a detector of a parameter and/or a spectral index such as the Normalized Difference Vegetation Index (NDVI) and/or the Normalized Difference Red Edge (NDRE) and/or the Water Band Index (WBI). The control unit 50 can thus be configured to receive from the mobile device 2 the parameter and/or index of the status of the working area 1, and wirelessly send such a parameter and/or index to the remote infrastructure.

In a further embodiment, the mobile device 2 can comprise the position detector: the control unit 50 is thus further configured to associate the relative detection position with the parameter or index of the status of the working area 1. In more detail, the system can be configured to generate a virtual map of the health and/or hydration status of the working area 1: one or more suggestions intended to improve the status of the working area or specific regions of said working area 1 can also be generated by the control unit. In particular, such suggestions can be directed to carry out a cutting operation and/or administering water and/or fertilizer in the working area. The control unit can also be configured to display on the user interface 101, and/or on the service user interface 101a, the virtual map of the status of the working area 1 and possibly such suggestions. The monitoring system can comprise multiple mobile devices: for example, such a system can comprise at least 5 mobile devices, preferably at least 2 mobile devices, configured to carry out maintenance operations within respective working areas. The control unit 50 can be configured to individually carry out a diagnostic monitoring procedure of each of these mobile devices: in such a case, the remote server is configured to receive the identification parameters and/or the diagnostic parameters of each mobile device of said plurality by means of the remote communication network.

The remote server 200 can be further configured to receive, via the remote communication network, the usage information and/or data of each mobile device and generate information and/or statistical data related to the use of the mobile devices by the respective users, and possibly information and/or historical data related to the evolution over time of such information and/or statistical data.

**Claims**

1. Land maintenance system, in particular for turfgrasses or gardens or agricultural land, said system comprising:

   - at least one mobile device (2) electrically powered by an on-board battery and comprising at least one payload (3) configured to carry out maintenance operations, in particular grass cutting operations, within a working area (1), a complete execution of maintenance operations within the working area (1) defining a working cycle of the mobile device (2), and
   - at least one control unit (50) operatively connected to said mobile device (2) and configured for:

     • receiving in input, and/or defining, a reference parameter representative of a spatial extent of the working area (1) and/or a reference time duration expressed as a time necessary to complete the maintenance operations within the working area (1),
     • determining, during said working cycle with temporal continuity or with temporal periodicity according to which two consecutive determinations are spaced apart by a predetermined time interval, said predetermined time interval being between 100 milliseconds and 600 seconds, a work completion parameter representative of a fraction of the working cycle whose corresponding maintenance operations have been completed and/or a remaining work parameter representative of a fraction of the working cycle in which the maintenance operations have not been completed yet,
     • estimating a charge level representative of a remaining charge of said on-board battery,
     • determining, as a function of the reference parameter, the work completion parameter and the estimated charge level or as a function of the remaining work parameter and the estimated charge level, at least one piece of information concerning if the estimated charge level is sufficient to complete the working cycle.

2. System according to any one of the preceding claims, wherein said system comprises a position detector, in particular a GNSS sensor, preferably a GPS sensor, or a beacon, operatively connected to the control unit (50) and configured to emit a position signal representative of the location of the mobile device (2) within the working area (1), the control unit (50) being configured for:

   - receiving said position signal,
   - determining, during said working cycle and in particular with temporal continuity or according to a predetermined temporal periodicity, a position of the mobile device (2) during an operating condition and
   - defining at least one of the work completion parameter and the remaining work parameter as a function of positions assumed by the mobile device (2) during an operating condition.

3. System according to any one of the preceding claims, wherein the control unit (50) is configured for defining the reference parameter by executing a setup cycle of the mobile device (2) within the working area (1), said setup cycle being prior to said working cycle and apt to simulate the movements of the mobile device (2) associated with the maintenance operations within the working area (1), wherein the control unit (50) is configured, during said setup cycle, for:

   - determining the spatial extent of the working area (1) and/or

- detecting the reference time duration necessary to complete the maintenance operations within the working area (1), in particular wherein the reference time duration substantially corresponds with the duration of the setup cycle;

or for receiving the reference parameter in input, wherein the control unit (50) is configured to receive in input at least one of the spatial extent of the working area (1) and the reference time duration necessary to complete the maintenance operations within the working area (1).

4. System according to any one of the preceding claims, wherein the control unit (50) is configured to update the reference parameter at each working cycle performed by the mobile device (2) within the working area (1), wherein the control unit (50) is configured to update the reference time duration on the basis of a time duration detected in a previous working cycle and/or in a plurality of previous working cycles, in particular in a previous working cycle and/or in a plurality of previous working cycles with similar climatic conditions and/or with similar ground conditions in the working area.

5. System according to any one of the preceding claims, when combined with claim 3, wherein the system comprises a position detector, in particular a GNSS sensor, preferably a GPS sensor, or a beacon, operatively connected to the control unit (50) and configured to emit a plurality of position signals representative of the location of the mobile device (2) within the working area (1) when in operation, during the working cycle or during the setup cycle, the control unit (50) being configured for:

- receiving said plurality of position signals during said setup cycle;
- determining the spatial extent of the working area (1) as a function of said plurality of position signals received during said setup cycle,

in particular wherein the control unit (50) is configured to define, as a function of said position signals received during the setup cycle, a perimeter boundary of the working area (1).

6. System according to any one of the preceding claims, wherein the control unit (50) is configured for defining the remaining work parameter as a function of a difference between the reference parameter and the work completion parameter;

wherein the remaining work parameter is determined as remaining work time or as remaining spatial extent of the working area (1) in which the maintenance operations have not yet been completed;

wherein the control unit (50) is configured to determine the remaining work time for completing the maintenance of the working area (1) by means of the mobile device (2) as a function of:

- the difference between the reference time duration and an elapsed working time, and
- the remaining spatial extent of the working area (1),

in particular wherein the control unit (50) is configured to determine said difference and said remaining spatial extent simultaneously.

7. System according to any one of the preceding claim, comprising a speed detector, optionally an encoder or a GNSS sensor, in particular a GPS sensor, configured to emit a signal representative of the advancement speed of the mobile device (2), the control unit (50) being configured to receive said speed signal and to determine a corresponding speed value or speed parameter of the mobile device (2) when in operation, in particular said speed value or speed parameter being instantaneous or an average value calculated on a predefined time interval and wherein the control unit (50) is configured to receive said speed signal and calculate a speed value of the mobile device (2) during the work cycle, optionally wherein the step of determining whether the estimated charge level is sufficient to complete the working cycle is performed as a function of said speed value of the mobile device (2) during the working cycle and/or optionally wherein the control unit (50) is configured to calculate the remaining work time as a function of the speed value or speed parameter of the mobile device (2) detected during the working cycle.

8. System according to any one of the preceding two claims, wherein the control unit (50) is configured to calculate the remaining work time as a function of:

- the speed value or speed parameter of the mobile device (2) detected during the working cycle, and
- the reference speed value or speed parameter,

in particular wherein the control unit (50) is configured for comparing the speed value of the mobile device (2) detected during the working cycle with the reference speed value, and, according to the result of said comparison:

- if the speed value of the mobile device (2) detected during the working cycle is substantially equal to the reference speed value, calculate the remaining work time as the difference between the reference time duration and an elapsed working time;

- if the speed value of the mobile device (2) detected during the working cycle is greater than the reference speed value, calculate the remaining work time as the difference between the reference time duration and an elapsed work time, said difference being multiplied by a coefficient <1 inversely proportional to said difference;
- if the speed value of the mobile device (2) detected during the working cycle is lower than the reference speed value, calculate the remaining work time as the difference between the reference time duration and an elapsed work time, said difference being multiplied by a coefficient >1 proportional to said difference.

9. System according to any one of the preceding claims, wherein the control unit (50) is configured for:

    - determining an operating parameter of the mobile device (2) representative of a workload, said workload being representative of an energy absorption from the battery by the mobile device (2),
    - determining whether the estimated charge level is sufficient to complete the working cycle according to said operating parameter,

optionally wherein said operating parameter comprises at least one of the instantaneous advancement speed of the mobile device (2), an average advancement speed of the mobile device (2), a current absorption by the battery of the mobile device (2), a cutting height defined by the payload (3), in particular by a cutting blade, a height of the grass detected in the working area (1), a slope gradient of the ground in the working area (1), a characteristic of the ground of the working area (1) representative for example of how compact and/or uneven and/or wet this ground is, a climatic parameter representative, for example, of the occurrence of wind and/or rain.

10. System according to any one of the preceding claims, wherein the control unit (50) is configured to define a battery usage reference index, said index being representative of an energy consumption of the battery needed to complete the working cycle, or

    said index being representative of a remaining battery duration measured at the end of the working cycle, and
    wherein the control unit (50) is configured to determine whether the estimated charge level is sufficient to complete the working cycle as a function of said battery usage reference index, optionally wherein the control unit (50) is configured to store and update, in particular overwrite, said battery usage reference index at each new working cycle and/or at each recharge of said mobile device (2).

11. System according to any one of the preceding claims, wherein the mobile device (2) comprises a ground slope detector configured to emit a signal representative of a ground slope in the working area (1), the control unit (50) being configured to receive said signal and assess a slope value, in particular a point-specific or average or maximum slope value in the working area (1), and/or a grass height detector configured to emit a signal representative of a grass height in the working area (1) the control unit (50) being configured to receive said signal and assess a grass height value, in particular a point-specific or average or maximum grass height value in the working area (1).

12. System according to any one of the preceding claims, wherein the control unit (50) is configured for:

    - verifying the following conditions:

        i) if the charge level is estimated to be insufficient to complete the working cycle, in particular if the remaining battery duration is less than the remaining operating time; or
        ii) if $A > C*B$

    where:

        A = remaining work time;
        B = remaining battery duration;
        C = safety factor, wherein $0,8 < C < 1$, in particular wherein $0,9 < C < 1$,

    - if at least one of said conditions i) or ii) are verified, activating, or proposing to a user to activate at least one corrective action, wherein said at least one corrective action comprises activating an energy-saving mode of the mobile device (2) and/or commanding the mobile device (2) to come back to a docking station and/or to modify a cutting height.

13. System according to any one of the preceding claims, wherein the control unit (50) is configured to make explicit through an interface, in particular to display on a screen, at least an alarm signal according to the result of the comparison between the remaining operative duration of the battery and the remaining work time, the control unit (50) being in particular configured to express said alarm signal when at least one of the following conditions occurs:

    - if the remaining work time is greater than the remaining operative duration of the battery, or
- if A>C*B

where:

A = remaining work time;
B = remaining operative duration of the battery;
C = safety factor, wherein 0,8<C<1, in particular wherein 0,9<C<1.

14. System according to any one of the preceding claims, wherein the mobile device (2) comprises:

- a self-driving lawnmower electrically powered by said battery, in particular a robot lawnmower, or
- a manually driven lawnmower electrically powered by said battery, said lawnmower being self or hand propelled, in particular a lawnmower tractor.

15. Method for the maintenance of land, in particular turfgrasses or gardens or agricultural land, by means of a maintenance system comprising:

- at least one mobile device (2) electrically powered by an on-board battery and comprising at least one payload (3) configured to carry out maintenance operations, in particular grass cutting operations, within a working area (1), a complete execution of maintenance operations within the working area (1) defining a working cycle of the mobile device (2), and
- at least one control unit (50) operatively connected to said mobile device, said method comprising at least the following steps:

• receiving in input, and/or defining, a reference parameter, said reference parameter being representative of a spatial extent of the working area (1) and/or of a reference time duration expressed as a time necessary to complete the maintenance operations within the working area (1),
• determining, during said working cycle with temporal continuity or with temporal periodicity according to which two consecutive determinations are spaced apart by a predetermined time interval, said predetermined time interval being between 100 milliseconds and 600 seconds, a work completion parameter representative of a fraction of the working cycle whose corresponding maintenance operations have been completed and/or a remaining work parameter representative of a fraction of the working cycle in which the operations have not been completed yet,

• estimating a charge level representative of a remaining charge of said on-board battery,
• determining, as a function of the reference parameter, the work completion parameter and the estimated charge level or as a function of the remaining work parameter and the estimated charge level, at least one piece of information regarding if the estimated charge level is sufficient to complete the work cycle.

**Patentansprüche**

1. Landpflegesystem, insbesondere für Rasengräser oder Gärten oder landwirtschaftliche Flächen, wobei das System Folgendes umfasst:

- mindestens eine mobile Vorrichtung (2), die von einer Bordbatterie bestromt wird und mindestens eine Nutzlast (3) umfasst, die dazu konfiguriert ist, Pflegevorgänge, insbesondere Grasschneidevorgänge, innerhalb eines Arbeitsbereichs (1) durchzuführen, wobei eine vollständige Ausführung von Pflegevorgängen innerhalb des Arbeitsbereichs (1) einen Arbeitszyklus der mobilen Vorrichtung (2) definiert, und
- mindestens eine Steuereinheit (50), die operativ mit der mobilen Vorrichtung (2) verbunden und konfiguriert ist, zum:

• Empfangen und/oder Definieren eines Referenzparameters, der für eine räumliche Ausdehnung des Arbeitsbereichs (1) und/oder eine Referenzzeitdauer repräsentativ ist, die als eine Zeit ausgedrückt ist, die erforderlich ist, um die Pflegevorgänge innerhalb des Arbeitsbereichs (1) abzuschließen,
• Bestimmen, während des Arbeitszyklus, mit zeitlicher Kontinuität oder mit zeitlicher Periodizität, gemäß der zwei aufeinanderfolgende Bestimmungen durch ein vorbestimmtes Zeitintervall voneinander beabstandet sind, wobei das vorbestimmte Zeitintervall zwischen 100 Millisekunden und 600 Sekunden liegt, eines Arbeitsabschlussparameters, der für einen Bruchteil des Arbeitszyklus repräsentativ ist, dessen entsprechende Pflegevorgänge abgeschlossen wurden, und/oder eines verbleibenden Arbeitsparameters, der für einen Bruchteil des Arbeitszyklus repräsentativ ist, in dem die Pflegevorgänge noch nicht abgeschlossen wurden,
• Schätzen eines Ladepegels, der für eine verbleibende Ladung der Bordbatterie repräsentativ ist,

• Bestimmen, als eine Funktion des Referenzparameters, des Arbeitsabschlussparameters und des geschätzten Ladepegels oder als eine Funktion des verbleibenden Arbeitsparameters und des geschätzten Ladepegels, mindestens einer Information darüber, ob der geschätzte Ladepegel ausreicht, um den Arbeitszyklus abzuschließen.

2. System nach einem der vorstehenden Ansprüche, wobei das System einen Positionsdetektor, insbesondere einen GNSS-Sensor, bevorzugt einen GPS-Sensor oder eine Bake, umfasst, der operativ mit der Steuereinheit (50) verbunden und dazu konfiguriert ist, ein Positionssignal abzugeben, das den Standort der mobilen Vorrichtung (2) innerhalb des Arbeitsbereichs (1) darstellt, wobei die Steuereinheit (50) konfiguriert ist zum:

    - Empfangen des Positionssignals,
    - Bestimmen, während des Arbeitszyklus und insbesondere mit zeitlicher Kontinuität oder gemäß einer vorbestimmten zeitlichen Periodizität, einer Position der mobilen Vorrichtung (2) während eines Betriebszustands und
    - Definieren mindestens eines von dem Arbeitsabschlussparameter und dem verbleibenden Arbeitsparameter als eine Funktion von Positionen, die von der mobilen Vorrichtung (2) während eines Betriebszustands eingenommen werden.

3. System nach einem der vorstehenden Ansprüche, wobei die Steuereinheit (50) zum Definieren des Referenzparameters durch Ausführen eines Einrichtzyklus der mobilen Vorrichtung (2) innerhalb des Arbeitsbereichs (1) konfiguriert ist, wobei der Einrichtzyklus vor dem Arbeitszyklus liegt und dazu geeignet ist, die Bewegungen der mobilen Vorrichtung (2) im Zusammenhang mit den Pflegevorgängen innerhalb des Arbeitsbereichs (1) zu simulieren, wobei die Steuereinheit (50) während des Einrichtzyklus konfiguriert ist zum:

    - Bestimmen der räumlichen Ausdehnung des Arbeitsbereichs (1) und/oder
    - Erfassen der Referenzzeitdauer, die erforderlich ist, um die Pflegevorgänge innerhalb des Arbeitsbereichs (1) abzuschließen, wobei insbesondere die Referenzzeitdauer im Wesentlichen der Dauer des Einrichtzyklus entspricht;

oder zum Empfangen des Referenzparameters als Eingabe, wobei die Steuereinheit (50) dazu konfiguriert ist, als Eingabe mindestens eines der räumlichen Ausdehnung des Arbeitsbereichs (1) und der Referenzzeitdauer zu empfangen, die erforderlich ist, um die Pflegevorgänge innerhalb des Arbeitsbereichs (1) abzuschließen.

4. System nach einem der vorstehenden Ansprüche, wobei die Steuereinheit (50) dazu konfiguriert ist, den Referenzparameter bei jedem Arbeitszyklus, der von der mobilen Vorrichtung (2) innerhalb des Arbeitsbereichs (1) durchgeführt wird, zu aktualisieren, wobei die Steuereinheit (50) dazu konfiguriert ist, die Referenzzeitdauer auf der Grundlage einer Zeitdauer zu aktualisieren, die in einem vorstehenden Arbeitszyklus und/oder in mehreren von vorstehenden Arbeitszyklen erfasst wurde, insbesondere in einem vorstehenden Arbeitszyklus und/oder mehrere vorstehende Arbeitszyklen mit ähnlichen klimatischen Bedingungen und/oder mit ähnlichen Bodenbedingungen in dem Arbeitsbereich.

5. System nach einem der vorstehenden Ansprüche in Kombination mit Anspruch 3, wobei das System einen Positionsdetektor, insbesondere einen GNSS-Sensor, bevorzugt einen GPS-Sensor oder eine Bake, umfasst, der/die operativ mit der Steuereinheit (50) verbunden ist und dazu konfiguriert ist, mehrere Positionssignale auszugeben, die den Standort der mobilen Vorrichtung (2) innerhalb des Arbeitsbereichs (1) darstellen, wenn sie in Betrieb ist, während des Arbeitszyklus oder während des Einrichtzyklus, wobei die Steuereinheit (50) konfiguriert ist zum:

    - Empfangen mehrerer Positionssignale während des Einrichtzyklus;
    - Bestimmen der räumlichen Ausdehnung des Arbeitsbereichs (1) als Funktion der mehreren Positionssignalen, die während des Einstellzyklus empfangen werden,

wobei die Steuereinheit (50) insbesondere dazu konfiguriert ist, als Funktion der Positionssignale, die während des Einstellzyklus empfangen werden, eine Umfangsgrenze des Arbeitsbereichs (1) zu definieren.

6. System nach einem der vorstehenden Ansprüche, wobei die Steuereinheit (50) dazu konfiguriert ist, den verbleibenden Arbeitsparameter als eine Funktion einer Differenz zwischen dem Referenzparameter und dem Arbeitsabschlussparameter zu definieren;

    wobei der verbleibende Arbeitsparameter als verbleibende Arbeitszeit oder als verbleibende räumliche Ausdehnung des Arbeitsbereichs (1), in dem die Pflegevorgängen noch nicht abgeschlossen sind, bestimmt wird;
    wobei die Steuereinheit (50) dazu konfiguriert ist, die verbleibende Arbeitszeit zum Abschließen der Wartung des Arbeitsbereichs (1) mittels der mobilen Vorrichtung (2) zu bestimmen als eine Funktion von:

- der Differenz zwischen der Referenzzeitdauer und einer abgelaufenen Arbeitszeit, und
- der verbleibenden räumlichen Ausdehnung des Arbeitsbereichs (1),

wobei die Steuereinheit (50) insbesondere dazu konfiguriert ist, die Differenz und die verbleibende räumliche Ausdehnung gleichzeitig zu bestimmen.

7. System nach einem der vorstehenden Ansprüche, das einen Geschwindigkeitsdetektor, optional einen Encoder oder einen GNSS-Sensor, insbesondere einen GPS-Sensor umfasst, der dazu konfiguriert ist, ein Signal auszugeben, das für die Vorschubgeschwindigkeit der mobilen Vorrichtung (2) repräsentativ ist, wobei die Steuereinheit (50) dazu konfiguriert ist, das Geschwindigkeitssignal zu empfangen und einen entsprechenden Geschwindigkeitswert oder Geschwindigkeitsparameter der mobilen Vorrichtung (2) im Betrieb zu bestimmen, wobei insbesondere der Geschwindigkeitswert oder Geschwindigkeitsparameter momentan oder ein Durchschnittswert ist, der an einem vordefinierten Zeitintervall berechnet wird, und wobei die Steuereinheit (50) dazu konfiguriert ist, das Geschwindigkeitssignal zu empfangen und einen Geschwindigkeitswert der mobilen Vorrichtung (2) während des Arbeitszyklus zu berechnen, wobei optional der Schritt des Bestimmens, ob der geschätzte Ladepegel ausreicht, um den Arbeitszyklus abzuschließen, als eine Funktion des Geschwindigkeitswerts der mobilen Vorrichtung (2) während des Arbeitszyklus durchgeführt wird, und/oder wobei optional die Steuereinheit (50) dazu konfiguriert ist, die verbleibende Arbeitszeit als eine Funktion des Geschwindigkeitswerts oder Geschwindigkeitsparameters der mobilen Vorrichtung (2), der während des Arbeitszyklus erfasst wird, zu berechnen.

8. System nach einem der vorstehenden zwei Ansprüche, wobei die Steuereinheit (50) dazu konfiguriert ist, die verbleibende Arbeitszeit als eine Funktion zu berechnen von:

- dem Geschwindigkeitswert oder Geschwindigkeitsparameter der mobilen Vorrichtung (2), der während des Arbeitszyklus erfasst wird, und
- dem Referenzgeschwindigkeitswert oder Geschwindigkeitsparameter,

wobei die Steuereinheit (50) insbesondere dazu konfiguriert ist, den Geschwindigkeitswert der mobilen Vorrichtung (2), der während des Arbeitszyklus erfasst wird, mit dem Referenzgeschwindigkeitswert zu vergleichen, und gemäß dem Ergebnis des Vergleichs:

- falls der Geschwindigkeitswert der mobilen Vorrichtung (2), der während des Arbeitszyklus erfasst wird, im Wesentlichen gleich dem Referenzgeschwindigkeitswert ist, die verbleibende Arbeitszeit als die Differenz zwischen der Referenzzeitdauer und einer abgelaufenen Arbeitszeit zu berechnen;
- falls der Geschwindigkeitswert der mobilen Vorrichtung (2), der während des Arbeitszyklus erfasst wird, größer als der Referenzgeschwindigkeitswert ist, die verbleibende Arbeitszeit als Differenz zwischen der Referenzzeitdauer und einer verstrichenen Arbeitszeit zu berechnen, wobei die Differenz mit einem Koeffizienten <1, der zu der Differenz umgekehrt proportional ist, multipliziert wird;
- falls der Geschwindigkeitswert der mobilen Vorrichtung (2), der während des Arbeitszyklus erfasst wird, niedriger ist als der Referenzgeschwindigkeitswert, die verbleibende Arbeitszeit als Differenz zwischen der Referenzzeitdauer und einer verstrichenen Arbeitszeit zu berechnen, wobei die Differenz mit einem Koeffizienten >1, der zu der Differenz proportional ist, multipliziert wird.

9. System nach einem der vorstehenden Ansprüche, wobei die Steuereinheit (50) konfiguriert ist zum:

- Bestimmen eines Betriebsparameters der mobilen Vorrichtung (2), der für eine Arbeitslast repräsentativ ist, wobei die Arbeitslast für eine Energieabsorption aus der Batterie durch die mobile Vorrichtung (2) repräsentativ ist,
- Bestimmen, ob der geschätzte Ladepegel ausreicht, um den Arbeitszyklus gemäß dem Betriebsparameter abzuschließen,

wobei optional der Betriebsparameter mindestens einen umfasst von der momentanen Vorschubgeschwindigkeit der mobilen Vorrichtung (2), einer durchschnittlichen Vorschubgeschwindigkeit der mobilen Vorrichtung (2), einer Stromaufnahme durch die Batterie der mobilen Vorrichtung (2), einer Schnitthöhe, die durch die Nutzlast (3), insbesondere durch ein Schneidmesser definiert ist, einer Höhe des im Arbeitsbereich (1) erfassten Grases, einem Neigungsgradienten des Bodens in dem Arbeitsbereich (1), einer Charakteristik des Bodens des Arbeitsbereichs (1), die beispielsweise dafür repräsentativ ist, wie kompakt und/oder uneben und/oder nass dieser Boden ist, einem Klimaparameter, der beispielsweise für das Auftreten von Wind und/oder Regen repräsentativ ist.

10. System nach einem der vorstehenden Ansprüche, wobei die Steuereinheit (50) dazu konfiguriert ist, einen Batterieverbrauchsreferenzindex zu definieren, wobei der Index für einen Energieverbrauch der Batterie, der benötigt wird, um den Arbeitszyklus abzuschließen, repräsentativ ist, oder

wobei der Index für eine verbleibende Batteriedauer, die am Ende des Arbeitszyklus gemessen wird, repräsentativ ist, und
wobei die Steuereinheit (50) dazu konfiguriert ist zu bestimmen, ob der geschätzte Ladepegel ausreicht, um den Arbeitszyklus als Funktion des Batterieverbrauchsreferenzindex abzuschließen, wobei die Steuereinheit (50) optional dazu konfiguriert ist, den Batterieverbrauchsreferenzindex bei jedem neuen Arbeitszyklus und/oder bei jedem Aufladen der mobilen Vorrichtung (2) zu speichern und zu aktualisieren, insbesondere zu überschreiben.

11. System nach einem der vorstehenden Ansprüche, wobei die mobile Vorrichtung (2) einen Bodenneigungsdetektor umfasst, der dazu konfiguriert ist, ein Signal abzugeben, das für eine Bodenneigung in dem Arbeitsbereich (1) repräsentativ ist, wobei die Steuereinheit (50) dazu konfiguriert ist, das Signal zu empfangen und einen Neigungswert, insbesondere einen punktspezifischen oder durchschnittlichen oder maximalen Neigungswert in dem Arbeitsbereich (1) zu beurteilen, und/oder einen Grashöhendetektor, der dazu konfiguriert ist, ein Signal abzugeben, das für eine Grashöhe in dem Arbeitsbereich (1) repräsentativ ist, wobei die Steuereinheit (50) dazu konfiguriert ist, das Signal zu empfangen und einen Grashöhenwert, insbesondere einen punktspezifischen oder durchschnittlichen oder maximalen Grashöhenwert in dem Arbeitsbereich (1) zu beurteilen.

12. System nach einem der vorstehenden Ansprüche, wobei die Steuereinheit (50) konfiguriert ist zum:

- Überprüfen der folgenden Bedingungen:

i) falls der Ladepegel schätzungsweise nicht ausreicht, um den Arbeitszyklus abzuschließen, insbesondere falls die verbleibende Batteriedauer kürzer ist als die verbleibende Betriebszeit; oder
ii) falls A>C*B

wobei:

A = verbleibende Arbeitszeit;
B = verbleibende Batteriedauer;

C = Sicherheitsfaktor, wobei 0,8<C<1, wobei insbesondere 0,9<C<1,

- falls mindestens eine der Bedingungen i) oder ii) verifiziert ist, Aktivieren oder Vorschlagen an einen Benutzer, mindestens eine Korrekturmaßnahme zu aktivieren, wobei die mindestens eine Korrekturmaßnahme das Aktivieren eines Energiesparmodus der mobilen Vorrichtung (2) und/oder Anweisen der mobilen Vorrichtung (2), zu einer Dockingstation zurückzukehren und/oder eine Schnitthöhe zu ändern, umfasst.

13. System nach einem der vorstehenden Ansprüche, wobei die Steuereinheit (50) dazu konfiguriert ist, durch eine Schnittstelle insbesondere zur Anzeige auf einem Bildschirm mindestens ein Alarmsignal gemäß dem Ergebnis des Vergleichs zwischen der verbleibenden Betriebsdauer der Batterie und der verbleibenden Arbeitszeit ausgibt, wobei die Steuereinheit (50) insbesondere dazu konfiguriert ist, dass Alarmsignal auszudrücken, wenn mindestens eine der folgenden Bedingungen auftritt:

- falls die verbleibende Arbeitszeit größer ist als die verbleibende Betriebsdauer der Batterie, oder
- falls A>C*B

wobei:

A = verbleibende Arbeitszeit;
B = verbleibende Betriebsdauer der Batterie;
C = Sicherheitsfaktor, wobei 0,8<C<1, wobei insbesondere 0,9<C<1.

14. System nach einem der vorstehenden Ansprüche, wobei die mobile Vorrichtung (2) Folgendes umfasst:

- einen selbstfahrenden Rasenmäher, der von der Batterie bestromt wird, insbesondere einen Rasenmäherroboter, oder
- einen von Hand angetriebenen Rasenmäher, der von der Batterie bestromt wird, insbesondere einen Rasenmähertraktor.

15. Verfahren zur Landpflege, insbesondere für Rasengräser oder Gärten oder landwirtschaftliche Flächen, mittels eines Pflegesystems, umfassend:

- mindestens eine mobile Vorrichtung (2), die von einer Bordbatterie bestromt wird und mindestens eine Nutzlast (3) umfasst, die dazu konfiguriert ist, Pflegevorgänge, insbesondere Grasschneidevorgänge, innerhalb eines Arbeitsbereichs (1) durchzuführen, wobei eine vollständige Ausführung von Pflegevorgängen innerhalb des Arbeitsbereichs (1) einen Arbeitszyklus der mobilen Vorrichtung (2) definiert, und
- mindestens eine Steuereinheit (50), die operativ mit der mobilen Vorrichtung verbunden ist, wobei das Verfahren mindestens die folgenden Schritte umfasst:

• Empfangen und/oder Definieren eines Referenzparameters, wobei der Referenzparameter für eine räumliche Ausdehnung des Arbeitsbereichs (1) und/oder für eine Referenzzeitdauer repräsentativ ist, die als eine Zeit ausgedrückt wird, die erforderlich ist, um die Pflegevorgänge innerhalb des Arbeitsbereichs (1) abzuschließen,
• Bestimmen, während des Arbeitszyklus mit zeitlicher Kontinuität oder mit zeitlicher Periodizität, gemäß welchen zwei aufeinanderfolgende Bestimmungen um ein vorbestimmtes Zeitintervall beabstandet sind, wobei das vorbestimmte Zeitintervall zwischen 100 Millisekunden und 600 Sekunden liegt, eines Arbeitsabschlussparameters, der für einen Bruchteil des Arbeitszyklus repräsentativ ist, dessen entsprechende Pflegevorgänge abgeschlossen wurden, und/oder eines verbleibenden Arbeitsparameters, der für einen Bruchteil des Arbeitszyklus repräsentativ ist, in dem die Vorgänge noch nicht abgeschlossen wurden,
• Schätzen eines Ladepegels, der für eine verbleibende Ladung der Bordbatterie repräsentativ ist,
• Bestimmen, als eine Funktion des Referenzparameters, des Arbeitsabschlussparameters und des geschätzten Ladepegels oder als eine Funktion des verbleibenden Arbeitsparameters und des geschätzten Ladepegels, mindestens einer Information darüber, ob der geschätzte Ladepegel ausreicht, um den Arbeitszyklus abzuschließen.

## Revendications

1. Système de maintenance des terres, en particulier pour les gazons ou les jardins ou les terres agricoles, ledit système comprenant :

   - au moins un dispositif mobile (2) alimenté électriquement par une batterie embarquée et comprenant au moins une charge utile (3) configurée pour effectuer des opérations de maintenance, en particulier des opérations de coupe de gazon, au sein d'une zone de travail (1), un achèvement complet des opérations de maintenance au sein de la zone de travail (1) définissant un cycle de travail du dispositif mobile (2), et

   - au moins une unité de commande (50) fonctionnellement connectée audit dispositif mobile (2) et configurée pour :

     • recevoir en entrée, et/ou définir, un paramètre de référence représentatif d'une étendue spatiale de la zone de travail (1) et/ou d'une durée de temps de référence exprimée en temps nécessaire à l'achèvement des opérations de maintenance au sein de la zone de travail (1),
     • déterminer, pendant ledit cycle de travail avec continuité temporelle ou avec périodicité temporelle selon lequel deux déterminations consécutives sont espacées d'un intervalle de temps prédéterminé, ledit intervalle de temps prédéterminé étant compris entre 100 millisecondes et 600 secondes, un paramètre d'achèvement de travail représentatif d'une fraction du cycle de travail dont les opérations de maintenance correspondantes ont été achevées et/ou un paramètre de travail restant représentatif d'une fraction du cycle de travail dans lequel les opérations de maintenance n'ont pas encore été achevées,
     • estimer un niveau de charge représentatif d'une charge restante de ladite batterie embarquée,
     • déterminer, en fonction du paramètre de référence, du paramètre d'achèvement du travail et du niveau de charge estimé ou en fonction du paramètre de travail restant et du niveau de charge estimé, au moins une information indiquant si le niveau de charge estimé est suffisant pour achever le cycle de travail.

2. Système selon l'une quelconque des revendications précédentes, dans lequel ledit système comprend un détecteur de position, en particulier un capteur GNSS, de préférence un capteur GPS, ou une balise, fonctionnellement connecté à l'unité de commande (50) et configuré pour émettre un signal de position représentatif de l'emplacement du dispositif mobile (2) au sein de la zone de travail (1), l'unité de commande (50) étant configurée pour :

   - recevoir ledit signal de position,
   - déterminer, pendant ledit cycle de travail et en particulier avec continuité temporelle ou selon une périodicité temporelle prédéterminée, une position du dispositif mobile (2) pendant une condition de fonctionnement et
   - définir au moins l'un du paramètre d'achèvement du travail et du paramètre de travail restant en fonction des positions prises par le dispositif mobile (2) pendant une condition de fonctionnement.

**3.** Système selon l'une quelconque des revendications précédentes, dans lequel l'unité de commande (50) est configurée pour définir le paramètre de référence en exécutant un cycle de configuration du dispositif mobile (2) au sein de la zone de travail (1), ledit cycle de configuration étant antérieur audit cycle de travail et apte à simuler les mouvements du dispositif mobile (2) associés aux opérations de maintenance au sein de la zone de travail (1), dans lequel l'unité de commande (50) est configurée, pendant ledit cycle de configuration, pour :

- déterminer l'étendue spatiale de la zone de travail (1) et/ou
- détecter la durée de temps de référence nécessaire pour achever les opérations de maintenance au sein de la zone de travail (1), en particulier lorsque la durée de temps de référence correspond sensiblement à la durée du cycle de configuration ;

ou pour recevoir le paramètre de référence en entrée, dans lequel l'unité de commande (50) est configurée pour recevoir en entrée au moins l'une de l'étendue spatiale de la zone de travail (1) et de la durée de temps de référence nécessaire pour achever les opérations de maintenance dans la zone de travail (1).

**4.** Système selon l'une quelconque des revendications précédentes, dans lequel l'unité de commande (50) est configurée pour mettre à jour le paramètre de référence à chaque cycle de travail effectué par le dispositif mobile (2) au sein de la zone de travail (1), dans lequel l'unité de commande (50) est configurée pour mettre à jour la durée de temps de référence sur la base d'une durée de temps détectée dans un cycle de travail précédent et/ou dans une pluralité de cycles de travail précédents, en particulier dans un cycle de travail précédent et/ou dans une pluralité de cycles de travail précédents avec des conditions climatiques similaires et/ou avec des conditions de sol similaires dans la zone de travail.

**5.** Système selon l'une quelconque des revendications précédentes, lorsqu'il est combiné avec la revendication 3, dans lequel le système comprend un détecteur de position, en particulier un capteur GNSS, de préférence un capteur GPS, ou une balise, fonctionnellement connecté à l'unité de commande (50) et configuré pour émettre une pluralité de signaux de position représentatifs de l'emplacement du dispositif mobile (2) au sein de la zone de travail (1) lorsqu'il est en fonctionnement, pendant le cycle de travail ou pendant le cycle de configuration, l'unité de commande (50) étant configurée pour :

- recevoir ladite pluralité de signaux de position pendant ledit cycle de configuration ;
- déterminer l'étendue spatiale de la zone de travail (1) en fonction de ladite pluralité de signaux de position reçus au cours dudit cycle de configuration,

en particulier dans lequel l'unité de commande (50) est configurée pour définir, en fonction desdits signaux de position reçus pendant le cycle de configuration, une limite périmétrique de la zone de travail (1).

**6.** Système selon l'une quelconque des revendications précédentes, dans lequel l'unité de commande (50) est configurée pour définir le paramètre de travail restant en fonction d'une différence entre le paramètre de référence et le paramètre d'achèvement de travail ;

dans lequel le paramètre de travail restant est déterminé comme le temps de travail restant ou comme l'étendue spatiale restante de la zone de travail (1) dans laquelle les opérations de maintenance n'ont pas encore été achevées ; dans lequel l'unité de commande (50) est configurée pour déterminer le temps de travail restant pour achever la maintenance de la zone de travail (1) au moyen du dispositif mobile (2) en fonction de :

- la différence entre la durée de temps de référence et un temps de travail écoulé, et
- l'étendue spatiale restante de la zone de travail (1),

en particulier dans lequel l'unité de commande (50) est configurée pour déterminer simultanément ladite différence et ladite étendue spatiale restante.

**7.** Système selon l'une quelconque des revendications précédentes, comprenant un détecteur de vitesse, éventuellement un codeur ou un capteur GNSS, en particulier un capteur GPS, configuré pour émettre un signal représentatif de la vitesse d'avancement du dispositif mobile (2), l'unité de commande (50) étant configurée pour recevoir ledit signal de vitesse et pour déterminer une valeur de vitesse ou un paramètre de vitesse correspondant du dispositif mobile (2) en fonctionnement, en particulier ladite valeur de vitesse ou le paramètre de vitesse étant instantané ou une valeur moyenne calculée sur un intervalle de temps prédéfini et dans lequel l'unité de commande (50) est configurée pour recevoir ledit signal de vitesse et calculer une valeur de vitesse du dispositif mobile (2) pendant le cycle de travail, éventuellement dans lequel l'étape consistant à déterminer si le niveau de charge estimé est suffisant pour achever le cycle de travail est effectuée en fonction de ladite valeur de vitesse du dispositif mobile (2) pendant le cycle de travail et/ou éventuellement dans lequel l'unité de commande (50) est configurée pour calculer le temps de travail restant en fonction de la valeur de vitesse ou du paramètre de vitesse du dispositif mobile (2) détecté pendant le cycle de travail.

8. Système selon l'une quelconque des deux revendications précédentes, dans lequel l'unité de commande (50) est configurée pour calculer le temps de travail restant en fonction de :

- la valeur de vitesse ou le paramètre de vitesse du dispositif mobile (2) détecté pendant le cycle de travail, et
- la valeur de vitesse de référence ou le paramètre de vitesse,

en particulier dans lequel l'unité de commande (50) est configurée pour comparer la valeur de vitesse du dispositif mobile (2) détectée pendant le cycle de travail avec la valeur de vitesse de référence, et, en fonction du résultat de ladite comparaison :

- si la valeur de vitesse du dispositif mobile (2) détectée pendant le cycle de travail est sensiblement égale à la valeur de vitesse de référence, calculer le temps de travail restant comme la différence entre la durée de temps de référence et un temps de travail écoulé ;
- si la valeur de vitesse du dispositif mobile (2) détectée pendant le cycle de travail est supérieure à la valeur de vitesse de référence, calculer le temps de travail restant comme la différence entre la durée de temps de référence et un temps de travail écoulé, ladite différence étant multipliée par un coefficient <1 inversement proportionnel à ladite différence ;
- si la valeur de vitesse du dispositif mobile (2) détectée pendant le cycle de travail est inférieure à la valeur de vitesse de référence, calculer le temps de travail restant comme la différence entre la durée de temps de référence et un temps de travail écoulé, ladite différence étant multipliée par un coefficient >1 proportionnel à ladite différence ;

9. Système selon l'une quelconque des revendications précédentes, dans lequel l'unité de commande (50) est configurée pour :

- déterminer un paramètre de fonctionnement du dispositif mobile (2) représentatif d'une charge de travail, ladite charge de travail étant représentative d'une absorption d'énergie de la batterie par le dispositif mobile (2),
- déterminer si le niveau de charge estimé est suffisant pour achever le cycle de travail en fonction dudit paramètre de fonctionnement,

éventuellement dans lequel ledit paramètre de fonctionnement comprend au moins l'un parmi la vitesse d'avancement instantanée du dispositif mobile (2), une vitesse d'avancement moyenne du dispositif mobile (2), une absorption de courant par la batterie du dispositif mobile (2), une hauteur de coupe définie par la charge utile (3), en particulier par une lame de coupe, une hauteur de l'herbe détectée dans la zone de travail (1), un gradient de pente du sol dans la zone de travail (1), une caractéristique du sol de la zone de travail (1) représentative par exemple de la compacité et/ou de l'inégalité et/ou de l'humidité de ce sol, un paramètre climatique représentatif, par exemple, de l'apparition de vent et/ou de pluie.

10. Système selon l'une quelconque des revendications précédentes, dans lequel l'unité de commande (50) est configurée pour définir un indice de référence d'utilisation de batterie, ledit indice étant représentatif d'une consommation d'énergie de la batterie nécessaire pour terminer le cycle de travail, ou

ledit indice étant représentatif d'une durée de batterie restante mesurée à la fin du cycle de travail, et
dans lequel l'unité de commande (50) est configurée pour déterminer si le niveau de charge estimé est suffisant pour achever le cycle de travail en fonction dudit indice de référence d'utilisation de batterie, éventuellement dans lequel l'unité de commande (50) est configurée pour stocker et mettre à jour, en particulier remplacer, ledit indice de référence d'utilisation de batterie à chaque nouveau cycle de travail et/ou à chaque recharge dudit dispositif mobile (2).

11. Système selon l'une quelconque des revendications précédentes, dans lequel le dispositif mobile (2) comprend un détecteur de pente au sol configuré pour émettre un signal représentatif d'une pente au sol dans la zone de travail (1), l'unité de commande (50) étant configurée pour recevoir ledit signal et évaluer une valeur de pente, en particulier une valeur de pente de point spécifique ou moyen ou maximal dans la zone de travail (1), et/ou un détecteur de hauteur d'herbe configuré pour émettre un signal représentatif d'une hauteur d'herbe dans la zone de travail (1), l'unité de commande (50) étant configurée pour recevoir ledit signal et évaluer une valeur de hauteur d'herbe, en particulier une valeur de hauteur d'herbe spécifique d'un point ou moyen ou maximal dans la zone de travail (1).

**12.** Système selon l'une quelconque des revendications précédentes, dans lequel l'unité de commande (50) est configurée pour :

- vérifier les conditions suivantes :

i) si le niveau de charge est estimé insuffisant pour achever le cycle de travail, en particulier si la durée restante de la batterie est inférieure à la durée de fonctionnement restante ; ou
ii) si

$$A > C*B$$

où :

A = temps de travail restant ;
B = durée restante de la batterie ;
C = facteur de sécurité, dans lequel $0,8<C<1$, en particulier dans lequel $0,9<C<1$,

- si au moins l'une desdites conditions i) ou ii) est vérifiée, activer ou proposer à un utilisateur d'activer au moins une action corrective, dans lequel ladite au moins une action corrective comprend l'activation d'un mode d'économie d'énergie du dispositif mobile (2) et/ou commander au dispositif mobile (2) de revenir à une station d'accueil et/ou de modifier une hauteur de coupe.

**13.** Système selon l'une quelconque des revendications précédentes, dans lequel l'unité de commande (50) est configurée pour rendre explicite par le biais d'une interface, en particulier pour afficher sur un écran, au moins un signal d'alarme en fonction du résultat de la comparaison entre la durée de fonctionnement restante de la batterie et le temps de travail restant, l'unité de commande (50) étant en particulier configurée pour exprimer ledit signal d'alarme lorsqu'au moins l'une des conditions suivantes se produit :

- si le temps de travail restant est supérieur à la durée de fonctionnement restante de la batterie, ou
- si

$$A > C*B$$

où :

A = temps de travail restant ;
B = durée de fonctionnement restante de la batterie ;

C = facteur de sécurité, dans lequel $0,8<C<1$, en particulier dans lequel $0,9<C<1$.

**14.** Système selon l'une quelconque des revendications précédentes, dans lequel le dispositif mobile (2) comprend :

- une tondeuse à gazon autonome alimentée électriquement par ladite batterie, en particulier une tondeuse à gazon robotisée, ou
- une tondeuse à gazon à entraînement manuel alimentée électriquement par ladite batterie, ladite tondeuse à gazon étant autopropulsée ou propulsée à la main, en particulier un tracteur de tondeuse à gazon.

**15.** Procédé pour la maintenance de terres, en particulier de gazons ou de jardins ou de terres agricoles, au moyen d'un système de maintenance comprenant :

- au moins un dispositif mobile (2) alimenté électriquement par une batterie embarquée et comprenant au moins une charge utile (3) configurée pour effectuer des opérations de maintenance, en particulier des opérations de coupe de gazon, au sein d'une zone de travail (1), un achèvement complet des opérations de maintenance au sein de la zone de travail (1) définissant un cycle de travail du dispositif mobile (2), et
- au moins une unité de commande (50) fonctionnellement connectée audit dispositif mobile, ledit procédé comprenant au moins les étapes suivantes :

• recevoir en entrée, et/ou définir, un paramètre de référence, ledit paramètre de référence étant représentatif d'une étendue spatiale de la zone de travail (1) et/ou d'une durée de temps de référence exprimée en temps nécessaire à l'achèvement des opérations de maintenance au sein de la zone de travail (1),
• déterminer, pendant ledit cycle de travail avec continuité temporelle ou avec périodicité temporelle selon lequel deux déterminations consécutives sont espacées d'un intervalle de temps prédéterminé, ledit intervalle de temps prédéterminé étant compris entre 100 millisecondes et 600 secondes, un paramètre d'achèvement de travail représentatif d'une fraction du cycle de travail dont les opérations de maintenance correspondantes ont été achevées et/ou un paramètre de travail restant représentatif d'une fraction du cycle de travail dans lequel les opérations n'ont pas encore été achevées,

• estimer un niveau de charge représentatif d'une charge restante de ladite batterie embarquée,

• déterminer, en fonction du paramètre de référence, du paramètre d'achèvement du travail et du niveau de charge estimé ou en fonction du paramètre de travail restant et du niveau de charge estimé, au moins une information indiquant si le niveau de charge estimé est suffisant pour achever le cycle de travail.

**FIG. 1**

**FIG. 2**

FIG. 3

FIG. 4

FIG. 5

**REFERENCES CITED IN THE DESCRIPTION**

**Patent documents cited in the description**

- EP 2829937 A1
- CN 109258060 B
- US 20190208700 A1
- WO 2020027611 A1
- JP 2009116634 A
- EP 3226094 A1
- EP 3760022 A1